(19) Europäisches Patentamt
European Patent Office
Office européen des brevets

(11) Publication number: **0 027 462**
**B1**

(12) **EUROPEAN PATENT SPECIFICATION**

(45) Date of publication of patent specification: **14.03.84**

(21) Application number: **80900966.5**

(22) Date of filing: **24.04.80**

(86) International application number:
**PCT/US80/00459**

(87) International publication number:
**WO 80/02334 30.10.80 Gazette 80/25**

(51) Int. Cl.³: **G 03 C 7/00**, G 03 C 5/54, G 03 C 1/76, G 03 C 1/40, G 03 C 1/10, C 07 D 275/02, C 07 D 277/04, C 07 D 277/08, C 07 D 311/82, C 09 B 11/28

(54) **Pnotosensitive element, film unit for forming a diffusion transfer color image, photographic image, diffusion transfer color process and compounds therefor.**

(30) Priority: **24.04.79 US 32876**
**24.04.79 US 32888**

(43) Date of publication of application:
**29.04.81 Bulletin 81/17**

(45) Publication of the grant of the patent:
**14.03.84 Bulletin 84/11**

(84) Designated Contracting States:
**DE FR GB NL**

(56) References cited:
**US - A - 3 022 316**
**US - A - 3 647 436**
**US - A - 3 687 678**
**US - A - 3 719 489**
**US - A - 4 076 529**

**N Ven Kataraman, 'The Chemistry of Synthetic Dyes', Volume III, published 1978, by Academic Press ( New York), see Chapter VIII especially pages 380-381**

(73) Proprietor: **POLAROID CORPORATION**
**549 Technology Square**
**Cambridge, Massachusetts 02139 (US)**

(72) Inventor: **LOCATELL, Louis, Jr.**
**7 Monroe Road**
**Wellesley Hills, MA 02181 (US)**
Inventor: **ROGERS, Howard Gardner**
**20 Newton Street**
**Weston, MA 02193 (US)**
Inventor: **BILOFSKY, Ruth Carlson**
**5 Fiske Road**
**Lexington, MA 02173 (US)**
Inventor: **CIECIUCH, Ronald F.**
**393 Clinton Road**
**Brookline, MA 02146 (US)**
Inventor: **ZEPP, Charles Melvin**
**919 Edgebrook Drive**
**Boylston, MA 01505 (US)**
Inventor: **BORROR, Alan Lawrence**
**18 Heritage Drive**
**Lexington, MA 02173 (US)**
Inventor: **CINCOTTA, Louis**
**225 River Road**
**Andover, MA 01810 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 027 462 B1**

(72) Inventor: **MAHONEY, Edmond M.**
**3 Marlyn Road**
**Billerica, MA 01821 (US)**
Inventor: **FEINGOLD, Michael Harvey**
**12 Sherwood Avenue**
**Randolph, MA 02368 (US)**

(74) Representative: **Reitzner, Bruno, Dr. et al,**
**Patentanwälte Dipl.-Ing. R. Splanemann Dr. B. Reitzner Tal 13**
**D-8000 München 2 (DE)**

# Photosensitive element, film unit for forming a diffusion transfer color image, photographic image, diffusion transfer color process and compounds therefor.

This invention relates to a photosensitive element, film unit for forming a diffusion transfer color image, a photographic image, a diffusion transfer color process and compounds therefor.

Multicolor images formed in accordance with the principles of subtractive color photography employ yellow, magenta and cyan image dyes. The yellow dye ideally transmits only green and red light and absorbs only blue light, and thus is sometimes referred to as "minus blue". In like manner, the magenta ("minus green") dye ideally absorbs only green light and transmits only blue and red light, and the cyan ("minus red") dye ideally absorbs only red light and transmits only blue and green light. Unfortunately, the dyes available for use in subtractive color photography are not "ideal" dyes, but tend to absorb some of the light that they ideally should transmit. This extra absorption results in less effective reproduction by the final image of one or more colors present in the original subject.

This problem may be illustrated by considering the reproduction of blue light: A multicolor phososensitive element, comprising a blue-sensitive silver halide layer, a green-sensitive silver halide layer and a red-sensitive silver halide layer, said silver halide layers having associated therewith, respectively, a yellow image dye-providing material, a magenta image dye-providing material, and a cyan image dye-providing material, is exposed to blue light in an amount effective to fully expose the blue-sensitive layer. Only the blue-sensitive silver halide layer is exposed; the green-sensitive and red-sensitive silver halide emulsion layers remain unexposed. If such an exposed photosensitive element were processed by diffusion transfer techniques, the yellow image dye-providing material would remain in the developed photosensitive element (negative component) but magenta and cyan image dyes would be transferred to the image-receiving layer (positive component). Since the magenta and cyan image dyes are "minus green" and "minus red" respectively, the *combination* of magenta and cyan dyes appear blue, i.e., they transmit blue light to the viewer and absorb green and red, thus reproducing the blue record of the original subject.

From this illustration it will be readily apparent that if either the magenta or cyan image dyes also absorb blue light, the purity and quality of the "blue image" will be impaired. In the world of practical color photography, such unwanted absorption, sometimes referred to as "tail" absorption, is the rule rather than the exception. Magenta image dyes typically exhibit significant absorption in the blue region.

The present invention is concerned with providing magenta image dyes exhibiting reduced blue absorption, i.e., increased blue transmission.

The primary object of this invention is to provide magenta image dye-providing materials which yield diffusion transfer color images exhibiting more desirable color characteristics.

A further object of this invention is to provide magenta dye developers which transmit a high proportion of blue light.

Another object of this invention is to provide magenta image dye-providing materials useful in dye release diffusion transfer processes, e.g., of the redox dye release or the silver-catalyzed dye release types, to provide magenta image dyes exhibiting high blue transmission.

A further object of this invention is to provide magenta image dye-providing materials which exhibit good absorption of green light while transmitting a high proportion of blue light.

Still another object of the present invention is to provide diffusion transfer products and processes employing such magenta image dye-providing materials.

Other objects of this invention will in part be obvious and will in part appear hereinafter.

For a fuller understanding of the nature and objects of the invention, reference should be had to the following detailed description.

This invention is particularly directed to photographic processes wherein the desired image is obtained by processing an exposed photosensitive silver halide material, with a processing composition distributed between two sheet-like elements, one of said elements including said photosensitive material. The processing composition is so applied and confined within and between the two sheet-like elements as not to contact or wet outer surfaces of the superposed elements, thus providing a film unit or film packet whose external surfaces are dry. The processing composition may be viscous or non-viscous, and preferably is distributed from a single-use rupturable container; such pressure rupturable processing containers are frequently referred to as "pods". The final image may be monochrome or multicolor, and is formed in an image-receiving layer included in one of said sheet-like elements.

As is well known in diffusion transfer photography, image-dye providing materials which may be employed in such processes generally may be characterized as either (1) initially soluble or diffusible in the processing composition but which are selectively rendered non-diffusible imagewise as a function of development; or (2) initially insoluble or non-diffusible in the processing composition but which selectively provide a diffusible product imagewise as a function of development. These image dye-providing materials may be complete dyes or dye intermediates, e.g., color couplers. The requisite differential in mobility or solubility may, for example, be obtained by a chemical action such as a redox reaction, a coupling reaction, or a cleavage reaction.

In accordance with this invention, it has been found that magenta image dyes containing the chromophoric system represented by

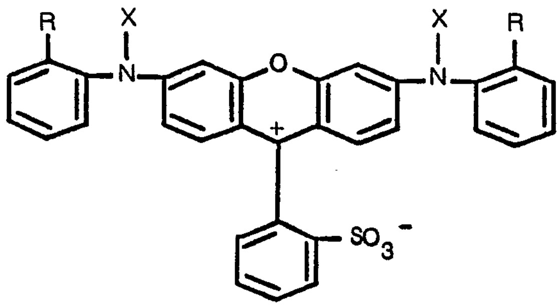

Formula A

wherein each R is the same or different and is an alkyl group, and each X is the same or different and is hydrogen, an alkyl group or a substituted alkyl group, exhibit highly desirable spectral properties, including high blue transmission. In the preferred embodiments, each R is an alkyl group of 1 to 4 carbons, and preferably each R is a methyl group. In particularly useful and preferred embodiments, each R and each X is an alkyl group, with at least one said X being a substituted alkyl, such as an aralkyl.

Image dye-providing materials capable of providing image dyes containing the chromophoric system of Formula A may be provided by including a diffusion control substituent Y which substituent includes a diffusion control moiety D. One such group of image dye-providing materials may be represented by Formula B:

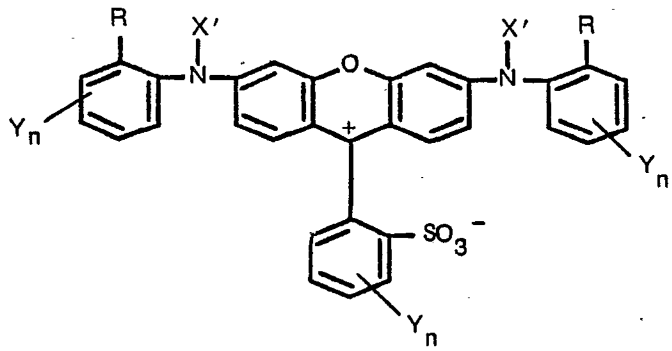

Formula B

wherein each Y is a diffusion control substituent containing a diffusion control moiety D providing, as a function of development of exposed light-sensitive silver halide, a diffusible or non-diffusible dye or dye intermetiate, X′ is hydrogen, alkyl or $—(CH_2—X^2—D)_n$ wherein $X^2$ is a divalent linking group, and n is 0 or 1, provided that at least one n is 1 image dye-providing materials within Formula B, as a function of the particular diffusion control moiety D, are suitable for use in diffusion transfer processes employing either initially diffusible or initially non-diffusible image dye-providing materials. As examples of diffusion control moieties D, mention may be made of hydroquinonyl groups, color coupling groups, sulfonamide phenol groups which cleave or ring close following oxidation to release a diffusible dye or dye intermediate, and of thiazolidine groups whose cleavage is silver catalyzed. The diffusion control moiety D may be attached to a covalent bond or a divalent linking group, e.g., an alkylene radical of 1 to 4 carbons to complete the substituent Y. Dyes wherein X′ is not hydrogen are preferred, and have been found to exhibit a shift in absorption maximum towards middle green and a narrowed absorption band width, as compared with dyes where X′ is hydrogen. Further, dyes wherein X′ is not hydrogen show less color shift in alkali. In contrast to dyes where the $—SO_3^-$ is replaced by a $—COO^-$ group, the dyes of this invention resist ring closure and resultant decolorization in acidic environments. Where the image dye-providing material is initially diffusible, a suitable ballast group, e.g., a long chain alkyl group, may be attached to the diffusion control group.

One resonance form of the chromophoric system represented by Formula A also may be represented as follows:

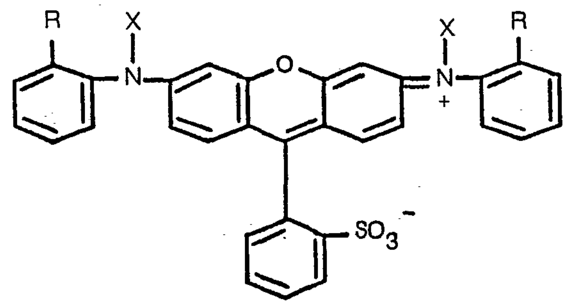

Formula C

In the preferred embodiment of this invention, the diffusion control group is a hydroquinonyl moiety, and the resulting dye developers are initially diffusible image dye-providing materials. As described in U.S. Patent No. 2,983,606 issued May 9, 1961 to Howard G. Rogers, a photosensitive element containing a dye developer and a silver halide emulsion is photoexposed and a processing composition applied thereto, for example, by immersion, coating, spraying, flowing, etc., in the dark. The exposed photosensitive element superposed prior to, during, or after the processing composition is applied, on a sheet-like support element which may be utilized as an image-receiving element. In a preferred embodiment, the processing composition is applied to the exposed photosensitive element in a substantially uniform layer as the photosensitive element is brought into superposed relationship with the image-receiving layer. The processing composition, positioned intermediate the photosensitive element and the image-receiving layer, permeates the emulsion to initiate development of the latent image contained therein. The dye developer is immobilized or precipitated in exposed areas as a consequence of the development of the latent image. This immobilization is apparently, at least in part, due to a change in the solubility characteristics of the dye developer upon oxidation and especially as regards its solubility in alkaline solutions. It may also be due in part to a tanning effect on the emulsion by oxidized developing agent, and in part to a localized exhaustion of alkali as a result of development. In unexposed and partially exposed areas of the emulsion, the dye developer is unreacted and diffusible and thus provides an imagewise distribution of unoxidized dye developer, diffusible in the processing composition, as a function of the point-to-point degree to exposure of the silver halide emulsion. At least part of this imagewise distribution of unoxidized dye developer is transferred, by inbibition, to a superposed image-receiving layer or element, said transfer substantially excluding oxidized dye developer. The image-receiving layer receives a depthwise diffusion, from the developed emulsion, of unoxidized dye developer without appreciably disturbing the imagewise distribution thereof to provide a reversed or positive color image of the developed image. The image-receiving element may contain agents adapted to mordant or otherwise fix the diffused, unoxidized dye developer. In a preferred embodiment of said U.S. Patent No. 2,983,606 and in certain commercial applications thereof, the desired positive image is revealed by separating the image-receiving layer from the photosensitive element at the end of a suitable imbibition period. Alternatively, as also disclosed in said U.S. Patent No. 2,983,606, the image-receiving layer need not be separated from its superposed contact with the photosensitive element, subsequent to transfer image formation, if the support for the image-receiving layer, as well as any other layers intermediate said support and image-receiving layer, is transparent and a processing composition containing a substance, e.g., a white pigment, effective to mask the developed silver halide emulsion or emulsions is applied between the image-receiving layer and said silver halide emulsion or emulsions.

Dye developers, as noted in said U.S. Patent No. 2,983,606, are compounds which contain, in the same molecule, both the chromophoric system of a dye and also a silver halide developing function. By "a silver halide developing function" is meant a grouping adapted to develop exposed silver halide. A preferred silver halide development function is a hydroquinonyl group. In general, the development function includes a benzenoid developing function, that is, an aromatic developing group which forms quinonoid or quinone substances when oxidized.

Multicolor images may be obtained using dye developers in diffusion transfer processes by several techniques. One such technique contemplates obtaining multicolor transfer images utilizing dye developers by employment of an integral multilayer photosensitive element, such as is disclosed in the aforementioned U.S. Patent No. 2,983,606 and in U.S. Patent No. 3,345,163 issued October 3, 1967 to Edwin H. Land and Howard G. Rogers, wherein at least two selectively sensitized photosensitive strata, superposed on a single support, are processed, simultaneously and without separation, with a single common image-receiving layer. A suitable arrangement of this type comprises a support carrying a red-sensitive silver halide emulsion stratum, a green-sensitive silver halide emulsion stratum and a blue-sensitive silver halide emulsion stratum, said emulsions having associated therewith, respectively, for example, a cyan dye developer, a magenta dye developer and a yellow dye developer. The dye developer may be utilized in the silver halide emulsion stratum, for example in the form of particles, or it may be disposed in a stratum behind the appropriate silver halide emulsion strata. Each set of silver halide emulsion and associated dye developer strata may be separated from other sets by suitable interlayers, for example, by a layer or stratum of gelatin or polyvinyl alcohol. In certain instances, it may be desirable to incorporate a yellow filter in front of the green-sensitive emulsion and such yellow filter may be incorporated in an interlayer. However, where desirable, a yellow dye developer of the appropriate spectral characteristics and present in a state capable of functioning as a yellow filter may be so employed and a separate yellow filter omitted.

Particularly useful products for obtaining multicolor dye developer images are disclosed in U.S. Patent No. 3,415,644 issued December 10, 1968 to Edwin H. Land. This patent discloses photographic products and processes wherein a photosensitive element and an image-receiving element are maintained in fixed relationship prior to exposure, and this relationship is maintained as a laminate after processing and image formation. In these products, the final image is viewed through a transparent (support) element against a light-reflecting, i.e., white background. Photoexposure is made through said transparent element and application of the processing composition provides a layer of light-reflecting material to provide a white background. The light-reflecting material (referred to in said patent as an "opacifying agent") is preferably titanium dioxide, and it also performs an opacifying function, i.e., it is effective to mask the developed silver halide emulsions so that the transfer image may be viewed without interference therefrom, and it also acts to protect the photosensitive silver halide emulsions from post-exposure fogging by light passing through said transparent layer if the photoexposed film unit is removed from the camera before image-formation is completed.

U.S. Patent No. 3,647,437, issued March 7, 1972 to Edwin H. Land, is concerned with improvements in products and processes disclosed in said U.S. Patent No. 3,415,644, and discloses the provision of light-absorbing materials to permit such processes to be performed, outside of the camera in which photoexposure is effected, under much more intense ambient light conditions. A light-absorbing material or reagent, preferably a pH-sensitive phthalein dye, is provided so positioned and/or constituted as not to interfere with photoexposure but so positioned between the photoexposed silver halide emulsions and the transparent support during processing after photoexposure as to absorb light which otherwise might fog the photoexposed emulsions. Furthermore, the light-absorbing material is so positioned and/or constituted after processing as not to interfere with viewing the desired image shortly after said image has been formed. In the preferred embodiments, the light-absorbing material, also sometimes referred to as an optical filter agent, is initially contained in the processing composition together with a light-reflecting material, e.g., titanium dioxide. The concentration of the light-absorbing dye is selected to provide the light transmission opacity required to perform the particular process under the selected light conditions.

In a particularly useful embodiment, the light-absorbing dye is highly colored at the pH of the processing composition, e.g., 13—14, but is substantially non-absorbing of visible light at a lower pH, e.g., less than 10—12. This pH reduction may be effected by an acid-reacting reagent appropriately positioned in the film unit, e.g., in a layer between the transparent support and the image-receiving layer.

The dye developers are preferably selected for their ability to provide colors that are useful in carrying out subtractive color photography, that is, the previously mentioned cyan, magenta and yellow. The dye developers employed may be incorporated in the respective silver halide emulsion or, in the preferred embodiment, in a separate layer behind the respective silver halide emulsion, and such a layer of dye developer may be applied by use of a coating solution containing the respective dye developer distributed, in a concentration calculated to give the desired coverage of dye developer per unit area, in a film-forming natural, or synthetic, polymer, for example, gelatin, polyvinyl alcohol, and the like, adapted to be permeated by the processing composition.

In accordance with the present invention, magenta dye developers containing the chromophoric system of Formula A may be provided by dye developers as defined in Formula B wherein the diffusion control moiety D is a silver halide developing moiety, e.g., a hydroquinonyl group. In such image dye-providing materials the diffusion control substituent Y may be represented by

$$—A—D$$

wherein D is a hydroquinonyl group and A is a covalent bond or a divalent linking group, e.g., alkylene. Examples of such dye developers include:

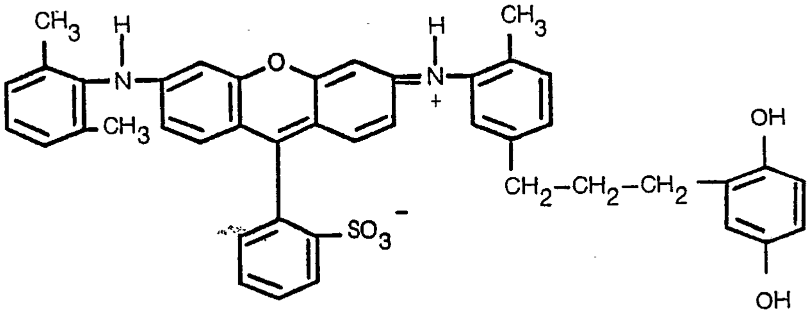

DYE 1

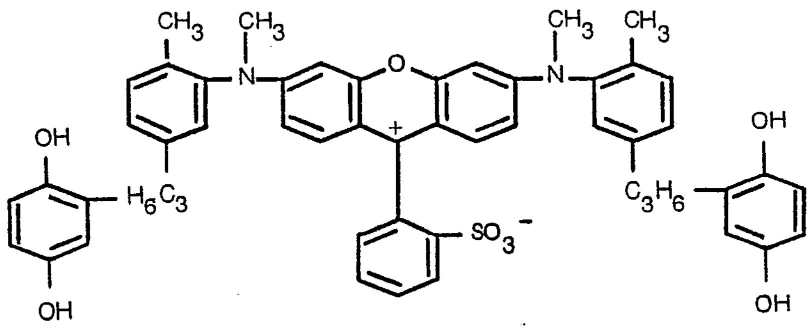

DYE 2

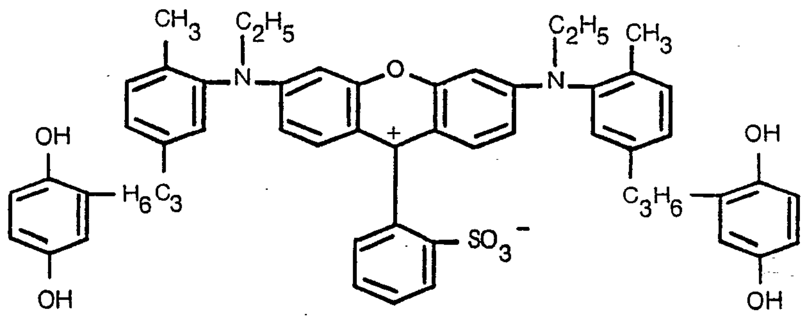

DYE 3

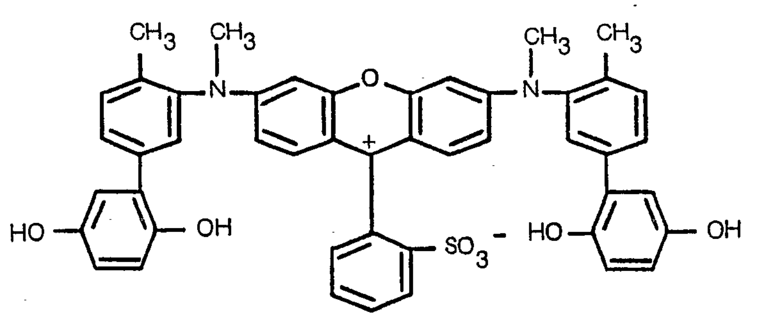

DYE 4

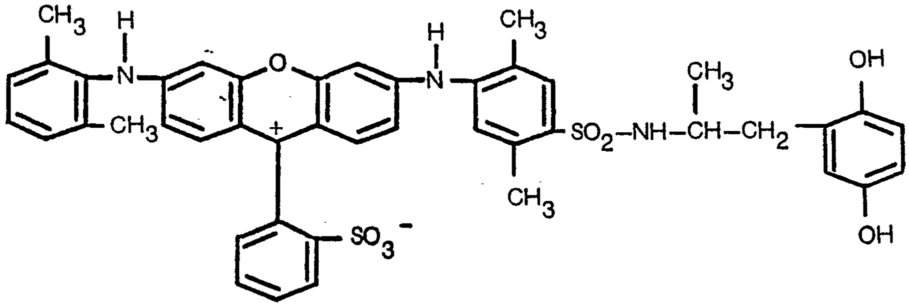

DYE 5

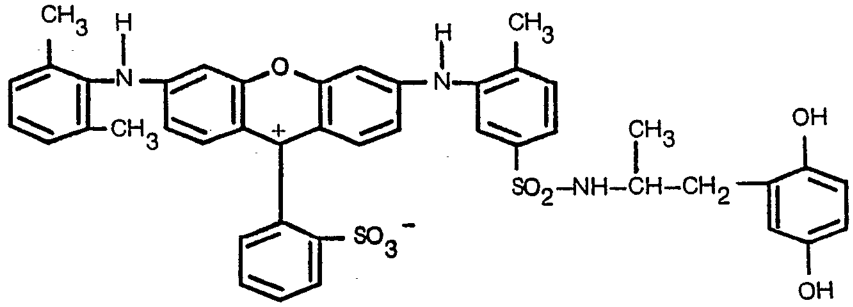

DYE 6

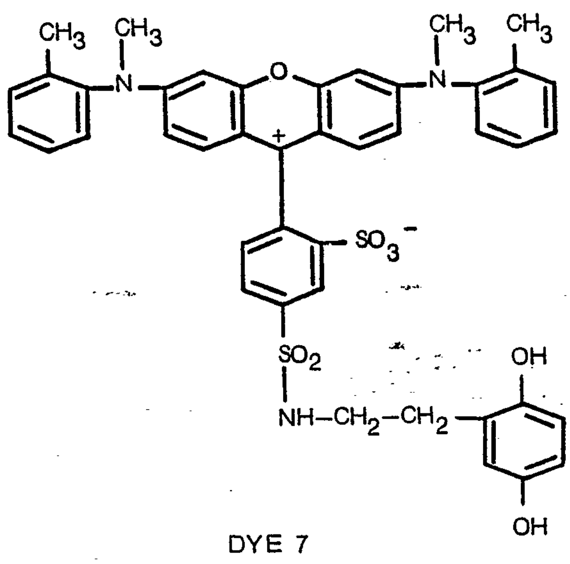

DYE 7

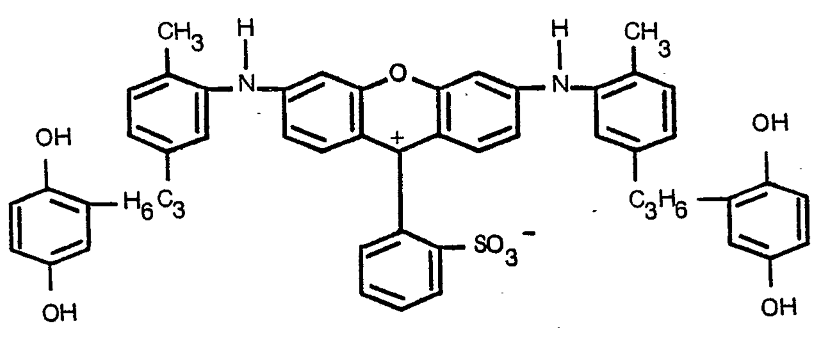

DYE 8

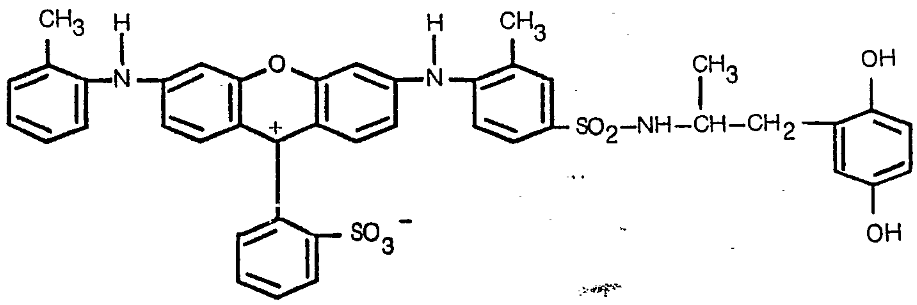

DYE 9

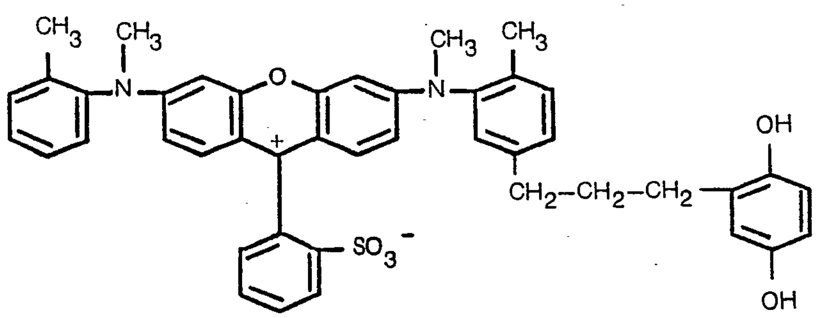

DYE 10

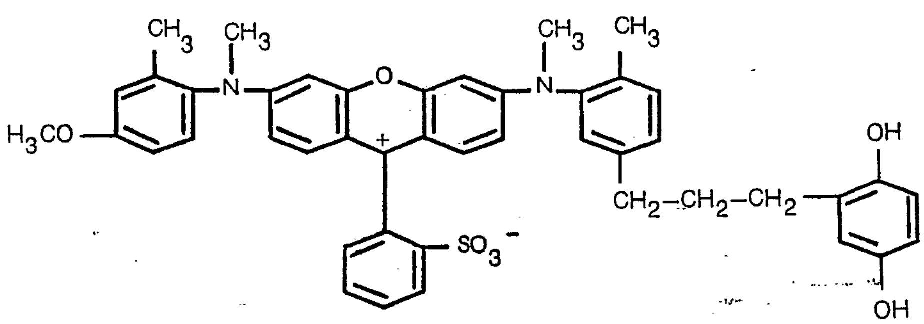

DYE 11

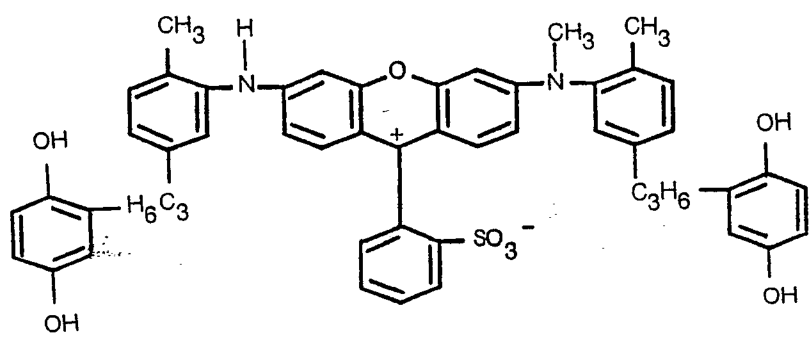

DYE 12

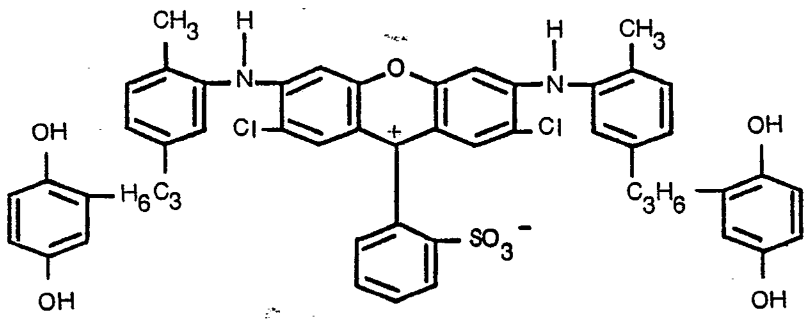

DYE 13

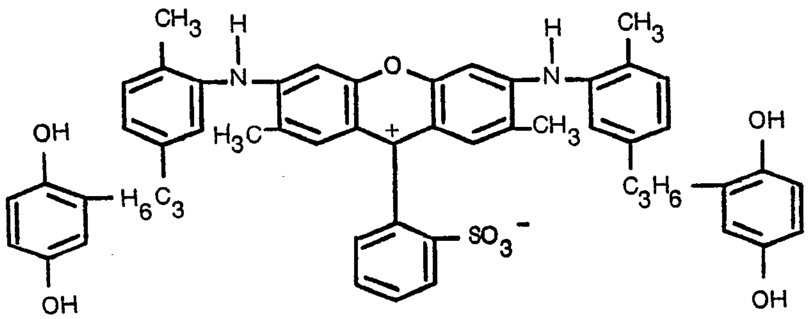

DYE 14

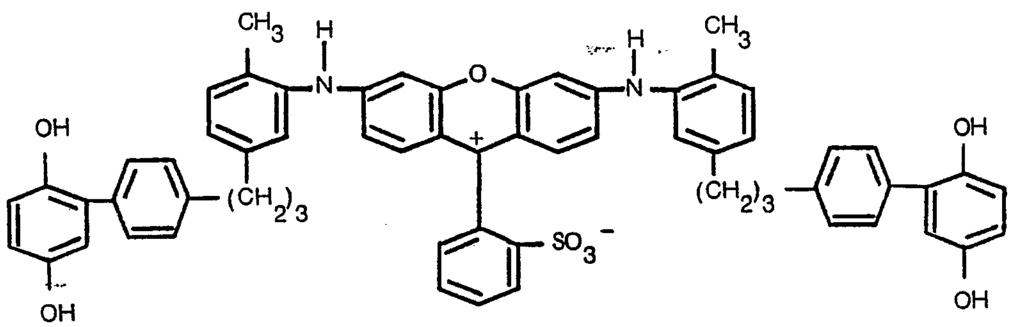

DYE 15

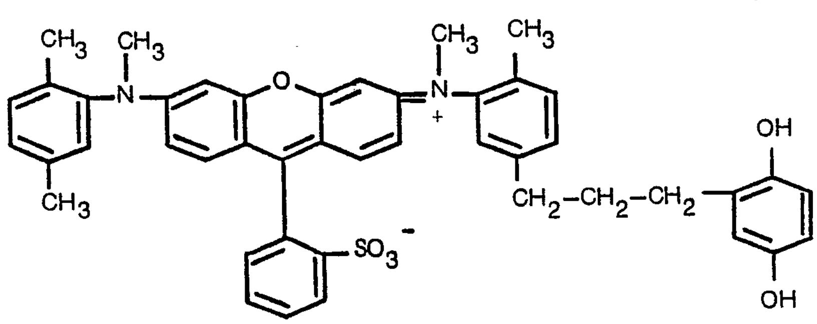

DYE 16

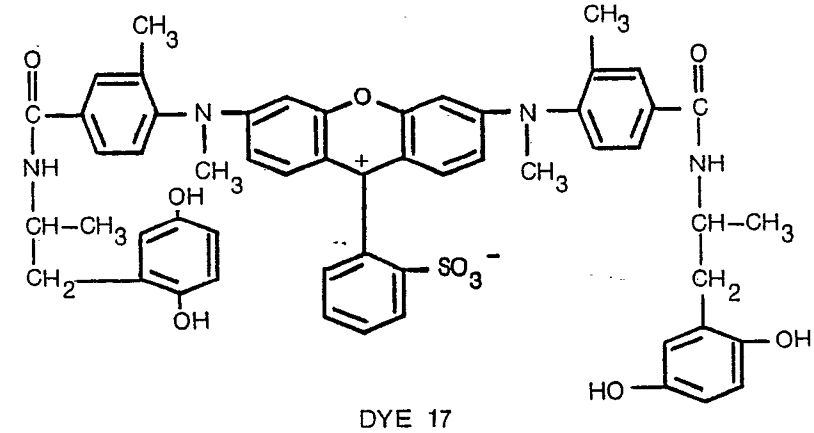

DYE 17

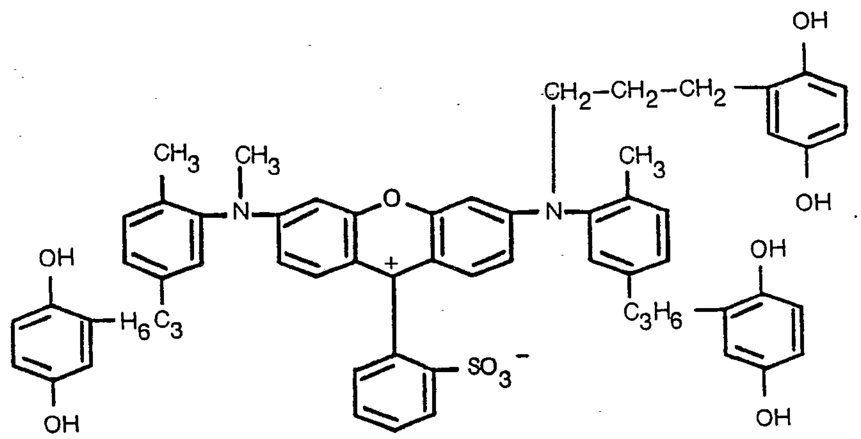

DYE 18

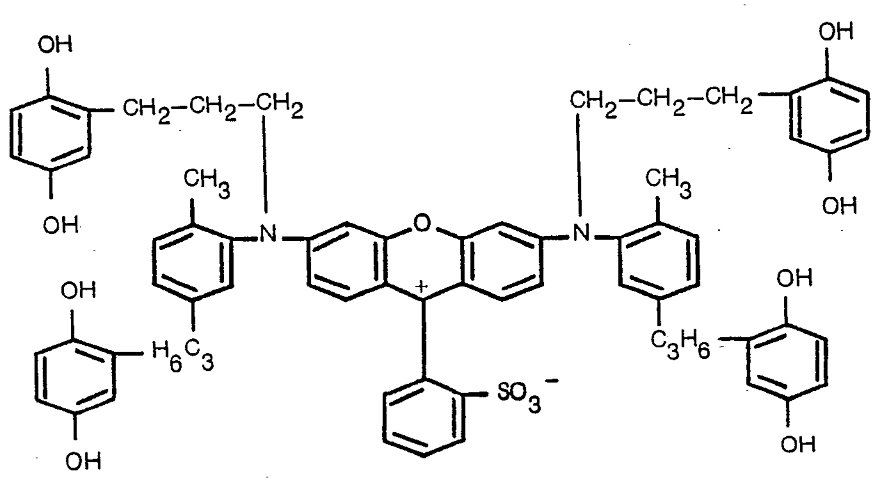

DYE 19

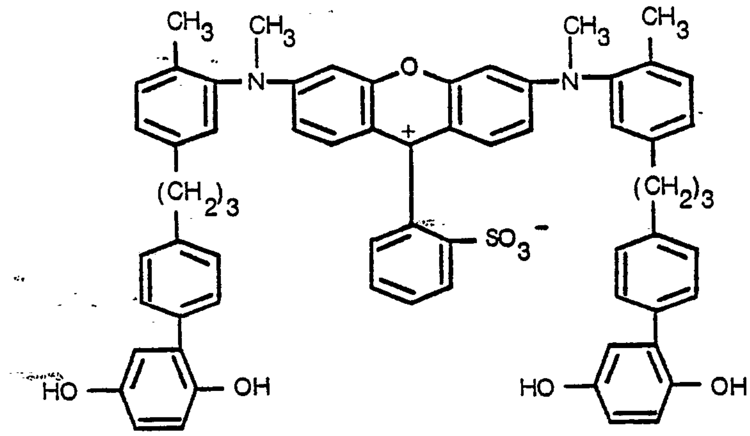

DYE 20

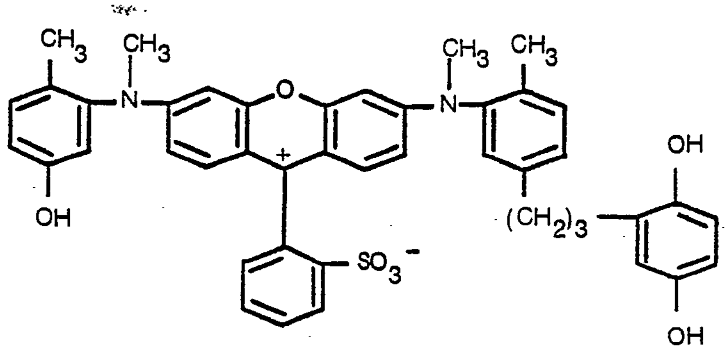

DYE 21

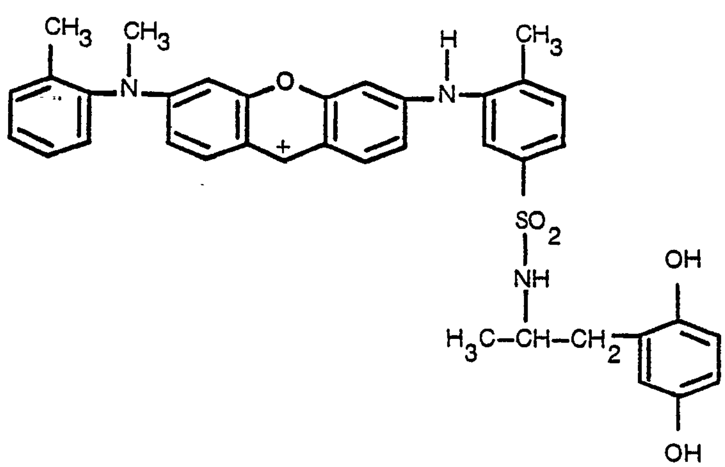

DYE 22

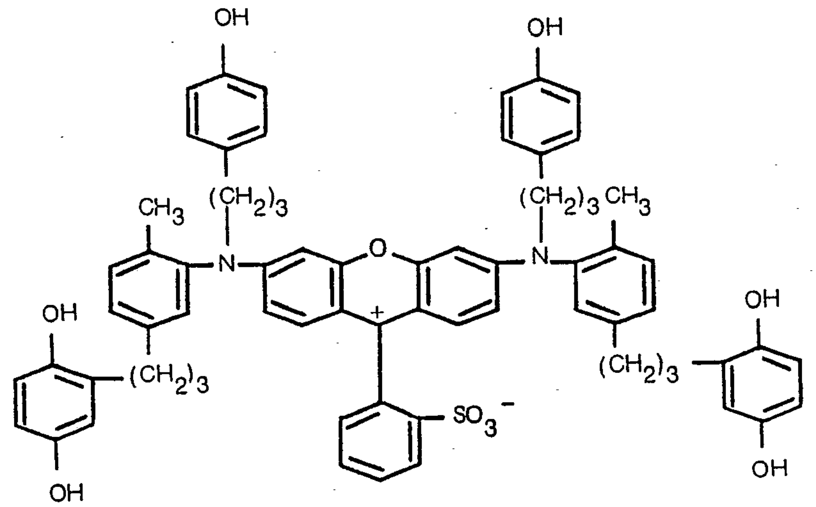

DYE 23

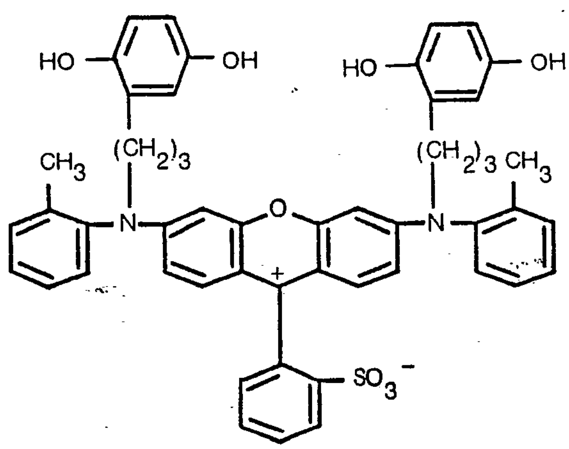

DYE 24

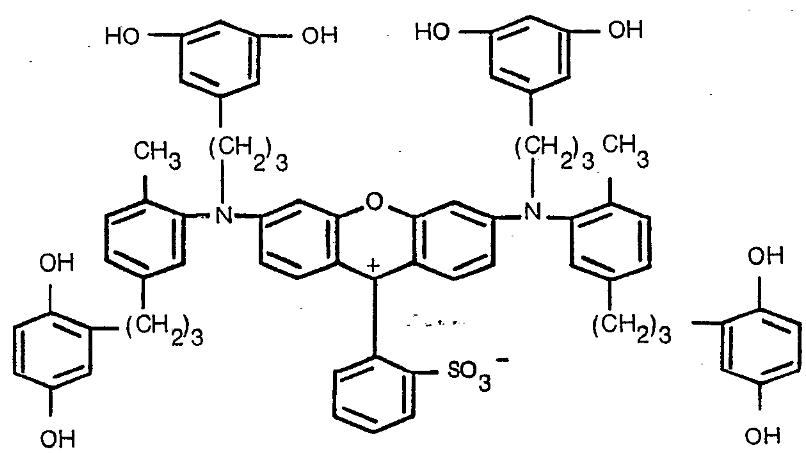

DYE 25

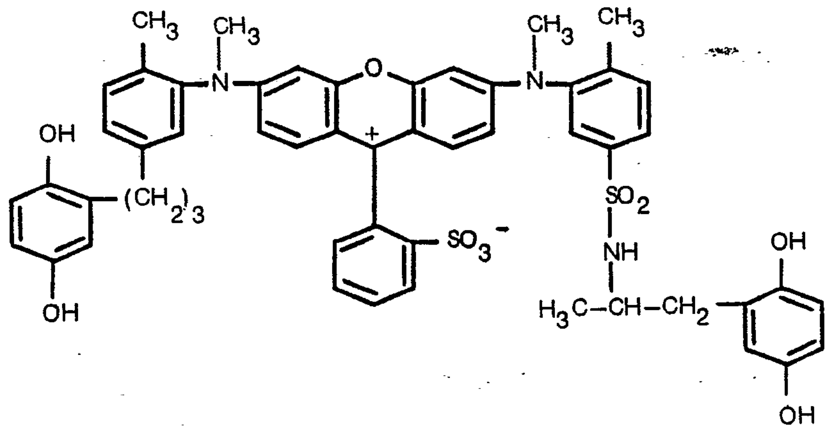

DYE 26

Dye developers of the type described above may be prepared, for example, by the reaction of dichlorosulfone fluorescein

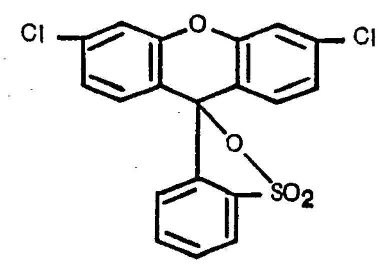

with, e.g., a compound of the formula

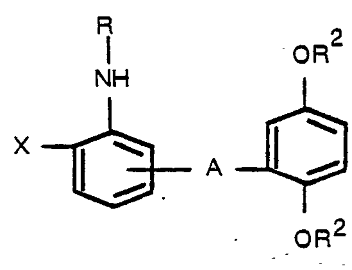

Formula D

wherein X, R and Y are as defined above, and each $R^2$ is the same and is hydrogen or a lower alkyl group. Where $R^2$ is alkyl, dealkylation of the resulting product regenerates the hydroquinone moiety. Where it is desired to have only one hydroquinonyl group in the dye developer, the dichloro starting material is first reacted to replace one chloro group with an anilino group, followed by the above described reaction to introduce the hydroquinonyl-containing anilino group, Alternatively, an aminoalkyl-hydroquinone may be reacted with a sulfinyl chloride-substituted anilino-substituted sulfone fluorescein to obtain dye developers such as Dyes 5 and 6 above.

Compounds within Formula D wherein A is an alkylene group of 1 to 5 carbons are described in U.S. Patent No. 3,236,893, issued February 22, 1966 to Blout, Green, Rogers, Simon and Woodward. Compounds within Formula D wherein A is a covalent bond are described in U.S. Patent No. 3,134,811 issued May 26, 1964 to Simon. Compounds within Formula D wherein A is —$SO_2$— are described in U.S. Patent No. 3,218,312 issued November 16, 1965 to Green. Compounds within Formula D wherein A is —S-alkylene ("alkylene" containing 1—5 carbons), e.g.,

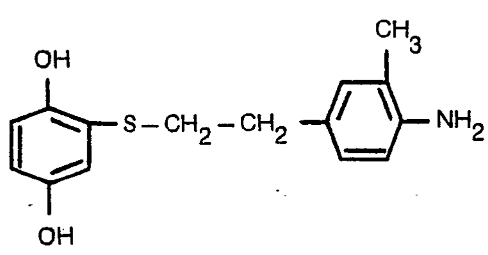

are described in U.S. Patent No. 3,009,958 issued November 21, 1961 and U.S. Patent No. 3,081,339 issued March 12, 1963, both issued to Green and Rogers. Compounds within Formula D wherein A is —S— are described in U.S. Patent No. 3,009,958 issued November 21, 1961 to Green and Rogers. Compounds within Formula D where A is —O— are described in U.S. Patent No. 3,061,434 issued October 3, 1961 to Green and Solodar. For convenience, the disclosures of these U.S. patents are hereby incorporated herein.

Where the anilino group(s) contain an amino or an aminoalkyl substituent, a hydroquinonyl group may be introduced by reaction with a carboxylic acid-substituted hydroquinone, e.g., homogentisic acid lactone or homogentisic acid chloride, following the procedures described in U.S. Patent No. 3,288,778 issued November 29, 1966 to Blout, Cohen, Green, Rogers, Simon and Woodward. Alternatively, a compound such as

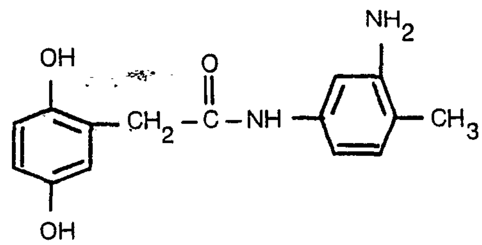

may be reacted with one or both chlorines of dichlorosulfone fluorescein; compounds of this type are described in U.S. Patent No. 3,214,469 issued October 26, 1965 to Green and Husek.

The following examples of the preparation of dye developers in accordance with this invention are given for purposes of illustration and are not intended to be limiting.

Example 1

5.0 g. (0.012 m) of dichlorosulfone fluorescein and 5.0 g. (0.041 m) of 2,6-dimethylaniline were refluxed together in 50 ml. of methanol for 0.5 hour. Excess methanol was stripped off, and the residue was triturated with diethyl ether until it was solid. The solid was filtered off, washed well with diethyl ether and dried. Chromatography on florisil (90/10 chloroform/methanol, by volume, as solvent) gave 3.0 g. (44%) of the monochloro intermediate

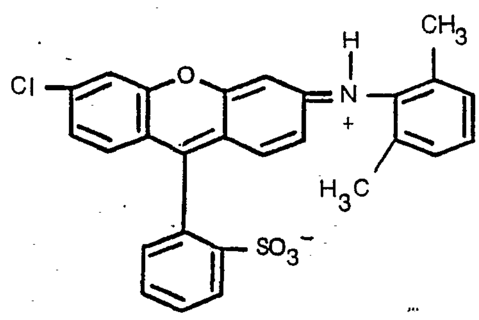

as an orange powder. 25 ml. of ethylene glycol was heated in an oil bath set at 130°C and nitrogen was bubbled in, with stirring, for 1 hour. To the hot, deoxygenated ethylene glycol was added 3.0 g. ($5.2 \times 10^{-3}$m) of the above monochloro intermediate and 4.0 g. ($15.7 \times 10^{-3}$m) of

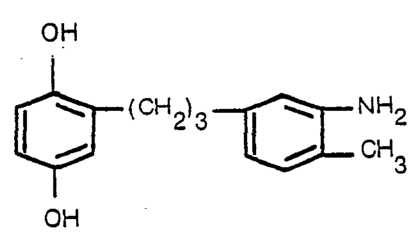

This solution was stirred at 130°C while nitrogen was slowly bubbled through. Aliquots were periodically worked up (TLC in methanol/chloroform, 15/85 parts by volume). After 4 hours, the hot reaction mixture was poured into 5% hydrochloric acid. The precipitate was filtered off, washed with water and

dried. A small amount of the monochloro intermediate was found to be present, and this was removed by extraction with chloroform in a Soxhlet extractor. 3.0 g. (81% yield) of the thus purified Dye 1

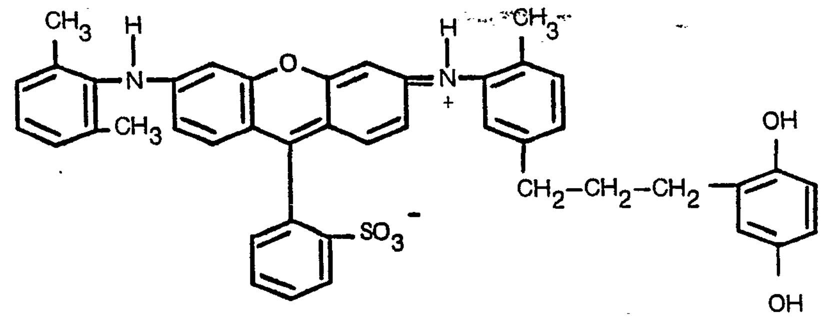

was obtained, and this product exhibited maximum absorption in methyl cellosolve at 534 nanometers, epsilon 64,000. Column chromatography with methanol/tetrahydrofurna, (15/85 parts by volume) gave a more pure sample of Dye 1 exhibiting an epsilon of 79,000 at 534 nanometers in methyl cellosolve.

Example 2

In a 250 ml. flask were placed 30 ml. of dimethyl sulfoxide, 6.0 g. (0.0148 m) of dichlorosulfone fluorescein, 9.0 g. (0.0300 m) of

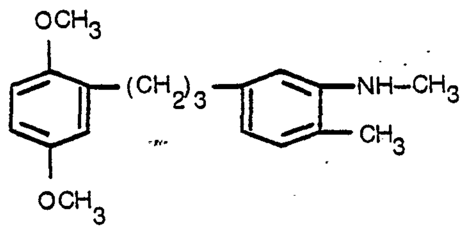

and 6.0 g. of magnesium oxide. Argon was bubbled through the stirred mixture for a few minutes, and the flask was then placed in an oil bath set at 140°C. The reaction was followed by TLC (Q5F plates, 10/90 methanol/chloroform, by volume). After 2 1/2 hours the reaction appeared to be nearly complete. Sodium sulfanilate (10.0 g.) was added, and the reaction mixture kept at 140°C for an additional hour. After cooling to 90°C, 30 ml. of water was added, and the mixture was stirred and cooled until the dye mass solidified. The solid was filtered off, washed well with water, dissolved in chloroform and dried over calcium sulfate. Evaporation of the chloroform gave 15.0 g. of crude dye. The crude dye was redissolved in chloroform and placed upon a florisil column. The column was eluted with methanol/chloroform (15/85 parts by volume), and dye being collected as it washed off the column. Evaporation of the eluent gave 8.0 g. (58%) of

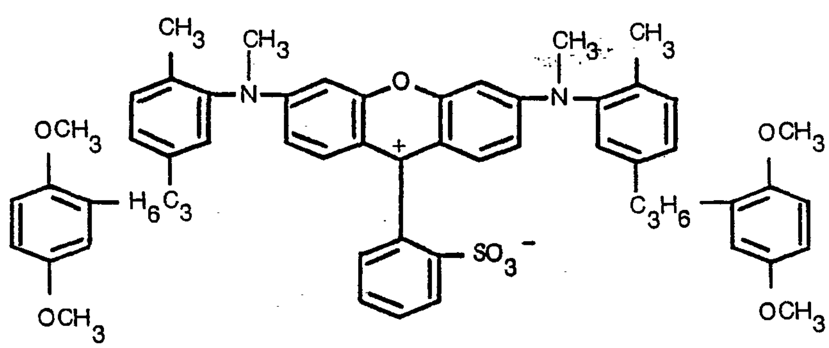

A solution of 8.0 g. ($8.6 \times 10^{-3}$m) of this dye in 500 ml. of chloroform was cooled in a dry ice-acetone bath, and 8.0 ml. (21.1 g., 0.084 m) of boron tribromide dissolved in 50 ml. of chloroform was slowly dripped into the stirred solution. Upon complete addition of the boron tribromide, the mixture was allowed to come to room temperature and was then stirred overnight. A solution of 50 ml. of concentrated hydrochloric acid in 450 ml. of water was cautiously added, and the mixture was stirred and

refluxed for 1 hour. The warm mixture was filtered, and the solid was washed well with water and dried to give 6.0 g. (80%) of Dye 2:

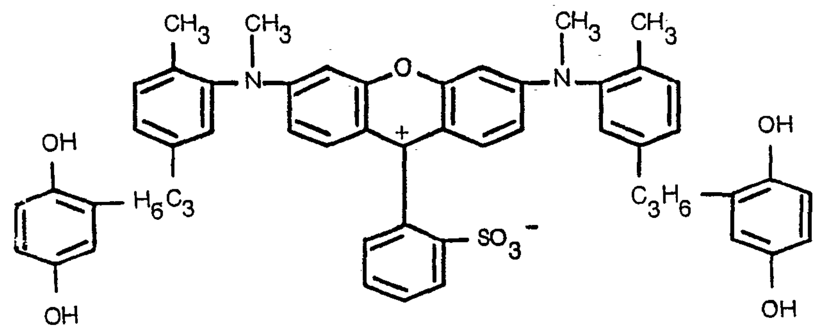

Dye 2 was found to exhibit maximum absorption in methyl cellosolve at 548 nanometers, epsilon 104,000.

The dimethoxy intermediate

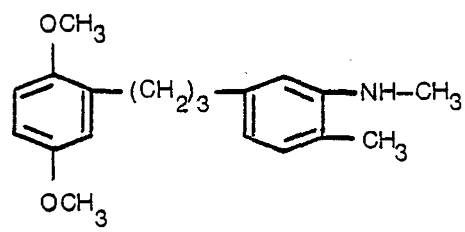

employed in Example 2 above was prepared as follows:

Example 2-A

600 g. (362 ml.) of concentrated sulfuric acid and 100 g. (71.5 ml.) of concentrated nitric acid (d. 1.42) were combined in a 3-liter three neck round bottom flask and cooled at 0°C in an ice-salt bath. To this was added 120 g. (1 mole) of tolualdehyde, with stirring and dropwise at a rate that kept the temperature at about 5°C. After addition of the aldehyde, the solution was stirred at 0°C for one hour and then dumped onto ice. Crude 4-methyl-3-nitrobenzaldehyde precipitated as a pale yellow solid which was filtered off, washed with water and dried (m.p. 41—43°C). 18.0 g. (0.1 m) of 2,5-dimethoxyacetophenone and 16.5 g. (0.1 m) of 4-methyl-3-nitrobenzaldehyde were dissolved in 75 ml. of absolute ethanol by gentle heating on a steam bath. Gaseous hydrogen chloride was bubbled in with stirring for a few minutes. The now hot, green solution was stoppered and left at room temperature overnight. Crystalline 3-nitro-4-methyl-2′,5′-dimethoxy chalcone

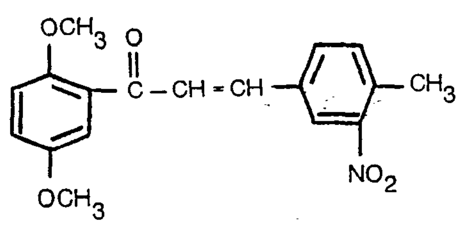

was filtered off and washed well with cold alcohol; yield 28 g. (86%). Material recrystallized from toluene melted at 146—147°C. 30 g. (0.046 m) of this chalcone was hydrogenated on a Parr apparatus in ethanol at about 2.8 bars pressure using 10% palladium-on-charcoal catalyst. After hydrogen uptake ceased, the bottle was removed and the precipitate dissolved by heating. The catalyst was filtered from the hot solution. Upon cooling of the filtrate

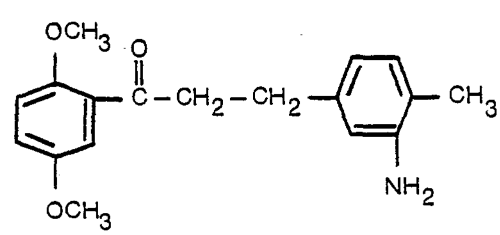

crystallized out as white crystals. 5.8 g. (0.019 m) of this ketone was refluxed in 25 ml. of absolute ethanol with 2.5 g. (0.05 m) of hydrazine hydrate for 1 hour. The ethanol was stripped off, and 4.0 g. (0.071 m) of powdered KOH was added. This mixture was stirred and heated under nitrogen at 235°C (oil bath temperature) for 45 minutes. After cooling, the residue was stirred in water to dissolve crystallized KOH, and the oily material was taken up in diethyl ether. After washing with water, the ether solution was dried over drierite. Evaporation of the diethyl ether gave an oil which solidified upon standing. This solid was dissolved in 5 ml. of hot toluene and 15 ml. of boiling petroleum ether was added. On cooling the amine

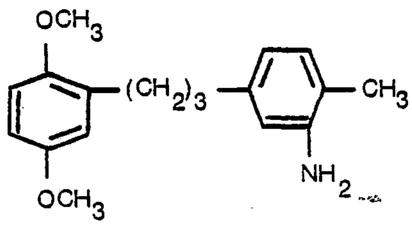

crystallized out as a white powder (3.1 g., 57% yield; m.p. 65—66°C). 10.0 g. (0.035 m) of this amine was refluxed in 150 ml. of toluene containing 6 g. of 88% formic acid. Water was removed by a Dean-Stark trap; when no more water came over (about 2 hours), the solution was cooled slightly and another 6 g. of formic acid was added. The solution was again refluxed until water did not come over. TLC (50/50, by volume, diethyl ether/petroleum ether) showed all starting material was gone and that a second compound had been formed. The solvent was evaporated under vacuum and the residual oil was dissolved in boiling ether. Upon cooling, the formamide

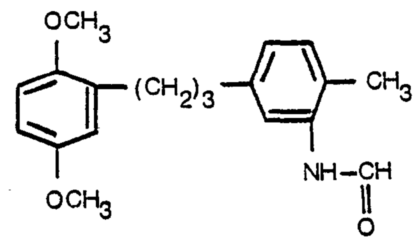

precipitated as a white powder (m.p. 107—108°C; 95% yield). 4.5 g. (0.0144 m) of the formamide was dissolved in 50 ml. of tetrahydrofuran and treated with 6.6 g. (0.087 m) of $BH_3$·DMS (borondimethyl sulfide). The solution was stirred over a weekend at room temperature, during which time a gelatinous precipitate formed. The reaction mixture was poured, with stirring, into 150 ml. water containing 10 ml. of concentrated hydrochloric acid. After cooling, the mixture was made strongly basic by the addition of solid sodium carbonate. The organic layer was taken up in diethyl ether and dried over drierite. Evaporation of the solvent gave an oil which crystallized on cooling. The solid was triturated in petroleum ether and filtered to give 4.0 g. (93% yield) of

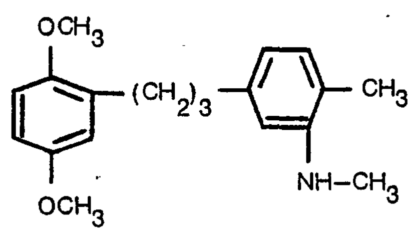

as a pure white powder, m.p. 39—40°C.

The following example illustrates the preparation of a sulfonyl chloride-substituted intermediate which may be employed to prepare a variety of dye developers within the scope of this invention.

Example 3

6.0 g. (0.012 m) of the monochloro intermediate

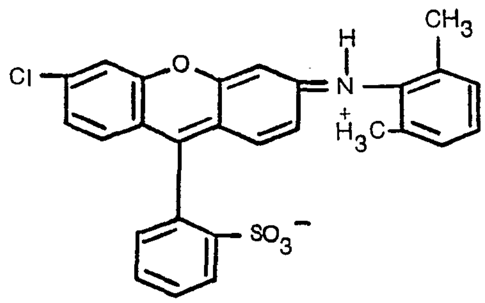

and 8.0 g. (0.036 m) of

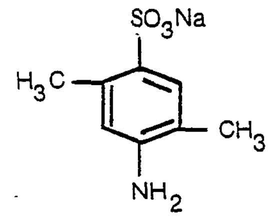

were heated in ethylene glycol overnight. The hot purple solution was poured into aqueous HCl, and the solid filtered off. The solid was slurried in water and solid potassium carbonate was added until a solution resulted. The solution was extracted twice with chloroform, and the aqueous layer was isolated and acidified to about pH 1 with concentrated hydrochloric acid. After heating to 90°C, salt was slowly added with stirring until solid dye began to precipitate. Stirring was continued until the temperature fell to 45—50°C, and the dye was filtered. Purification gave 4.0 g. of

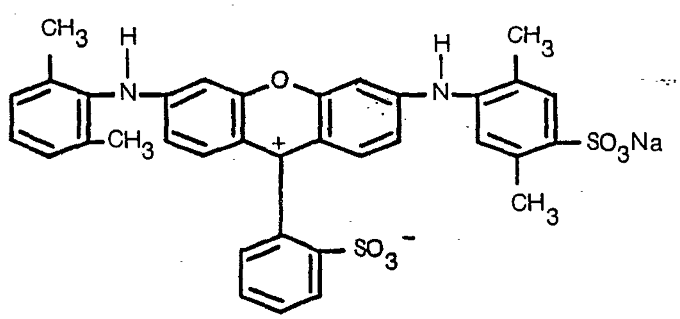

4.0 g. ($6 \times 10^{-3}$m) of this dye was slurried in 50 g. of thionyl chloride. 2.0 ml. of dimethyl formamide was added, and the solution was stirred at room temperature for 1 hour. After pouring onto ice, with stirring, the sulfonyl chloride was filtered off and washed well with water. After sucking under a rubber dam, the damp material was dissolved in tetrahydrofuran, dried over drierite and evaporated to give

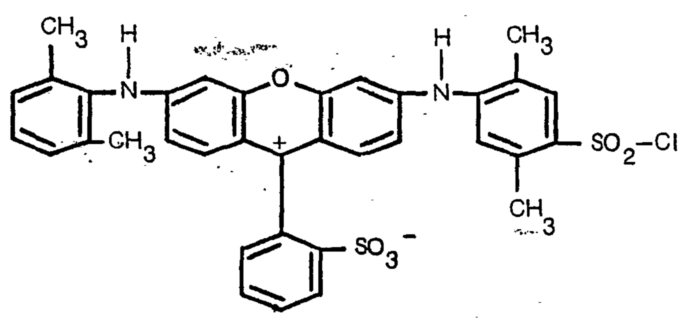

The sulfonyl chloride prepared in Example 3 may be reacted with a wide variety of amino-substituted hydroquinones to provide dye developers within the scope of this invention. Thus, for example, Dye 5 above may be prepared by reacting this sulfonyl chloride with

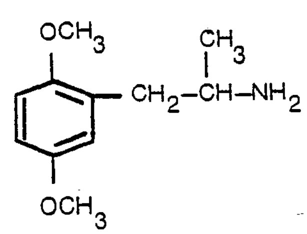

followed by demethylation. It will be readily recognized that a dye developer containing two such

sulfonamido-linked hydroquinonyl groups may be obtained by replacing both chlorines of dichlorosulfone fluorescein with, e.g.,

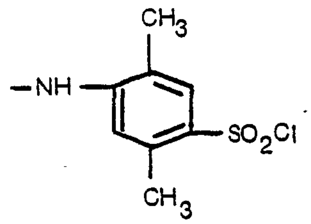

and reacting the resulting bis-sulfonychloride with two equivalents of the desired amino-substituted hydroquinone.

The following example is given to illustrate the use of a dye developer of this invention in a diffusion transfer process.

Example 4

A photosensitive element was prepared by coating a subcoated transparent 4 mil polyethylene terephthalate film base with a solution of Dye 2 and cellulose acetate hydrogen phthalate dissolved in a 50:50 mixture, by volume, of acetone and methyl cellosolve to provide a layer containing approximately 258 mg/m$^2$ of Dye 2 and approximately 258 mg/m$^2$ of cellulose acetate hydrogen phthalate. Over this dye layer was coated a green-sensitive silver iodobromide emulsion at a coverage of about 473 mg/m$^2$ of silver and 146 mg/m$^2$ of gelatin. Over the silver halide emulsion layer there was coated a gelatin layer containing about 323 mg/m$^2$ of gelatin and 81 mg/m$^2$ of 4′-methylphenylhydroquinone. The resulting photosensitive element then was exposed (2 meter-candle-seconds) on a sensitometer to a test exposure scale or step-wedge. In the dark, a layer approximately 0.051 mm of a processing composition containing (approximate concentrations):

| | |
|---|---|
| Potassium hydroxide (45% solution) | 380 g. |
| Carboxymethyl hydroxyethyl cellulose | 52 g. |
| Titanium dioxide | 2028 g. |
| 6-methyl uracil | 14.2 g. |
| bis- (β-aminoethyl)-sulfide | 1 g. |
| 5-bromo-6-methyl-4-azabenzimidazole | 1.5 g. |
| Benzotriazole | 27 g. |
| Lithium nitrate | 0.1 g. |
| Colloidal silica (30% aqueous solution) | 88 g. |
| N-2-hydroxyethyl-N,N′,N′-tris-carboxymethyl-ethylene diamine | 40 g. |
| Lithium hydroxide | 5 g. |
| Polyethylene glycol (molecular weight 6,000) | 26 g. |
| N-phenethyl-α-picolinium bromide (50% aqueous solution) | 70 g. |
| N-benzyl-α-picolinium bromide (50% aqueous solution) | 121 g. |
| 6-benzylamino-purine | 19 g. |
| Water | 1757 g. |

between the exposed photosensitive element and the transparent image-receiving element as said

elements were brought into superposed relationship. The resulting laminate was kept in the dark for 10 minutes (to avoid fogging the developed silver halide emulsion by light passing through the transparent film base). When brought into the light, a well defined positive magenta dye image (reflection density $D_{max}$ 1.70, $d_{min}$ 0.33) was visible through the transparent base of the image-receiving element against the white layer of titanium dioxide provided by the processing composition, without separating the superposed elements. Inspection of the developed photosensitive element through the transparent film base of the photosensitive element showed a well defined negative silver image in the developed silver halide emulsion layer, and very little magenta dye developer left in undeveloped areas, indicating an efficient use of the coated dye developer.

The image-receiving element used in Example 4 comprised a 0,1 mm transparent polyethylene terephthalate carrying, in order:

1. a mixture of about 8 parts, by weight of a partial butyl ester of polyethylene/maleic anhydride and about 1 part, by weight, of polyvinyl butyral to provide a polymeric acid layer having a coverage of about 26,9 g/m²;

2. a mixture of about 7 parts, by weight, of hydroxypropyl cellulose (Klucel J12HB(R), Hercules, Inc., Wilmington, Delaware), and about 4 parts, by weight, of polyvinyl alcohol; to form a spacer layer having a coverage of about 5.38 g/m² and

3. a mixture of about 3 parts of (a) a mixture of about 2 parts of polyvinyl alcohol and 1 part of poly-4-vinylpyridine and 1 part of a graft copolymer of 4-vinylpyridine and vinyl benzyl trimethyl ammonium chloride on hydroxyethyl cellulose (mole ratio 1:0.5:1) to form an image-receiving layer having a coverage of about 3.33 g/m².

The FIGURE is a graph of the percent reflectance of visible light aganst wavelength in nanometers of a magenta monochrome reflection print prepared in substantially the same manner as in the above example, made three days after processing and using magnesium carbonate as the reference material.

As noted above, magenta image dye-providing materials containing the chromophoric system:

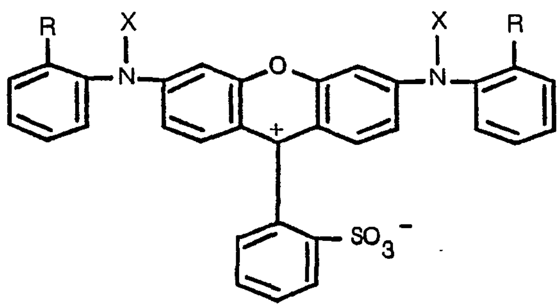

in accordance with this invention are not restricted to dye developers, but include many other types of initially diffusible and initially non-diffusible image dye-providing materials.

Thus, for example, an initially diffusible coupling dye useful in the diffusion transfer process described in U. S. Patent No. 3,087,817 issued April 30, 1963 to Howard G. Rogers may be prepared by substituting one or both of the anilino groups with a color coupling moiety, such as phenol or naphthol having a free position para to the hydroxyl group. As an example of such a coupling dye, mention may be made of:

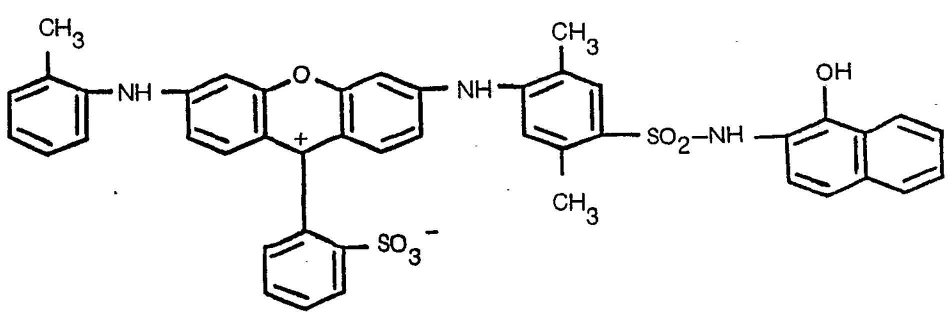

This dye is initially diffusible, but is rendered non-diffusible by coupling with the oxidation product of a color developer, e.g., a p-phenylene diamine or a p-aminophenol, to form a less diffusible product. If the coupling position is substituted by a substituent which renders the dye initially nondiffusible by virtue of a ballast group and which substituent is displaceable upon coupling, such a dye may be employed to provide a diffusible dye were coupling occurs, employing the principles described, e.g., in U. S. Patent No. 3,227,550 issued on January 6, 1966.

As an example of an initially non-diffusible "redox dye releaser" dye useful in the diffusion transfer

process described in U. S. Patent No. 4,076,529 issued February 28, 1978 to Fleckenstein and Figueras, mention may be made of

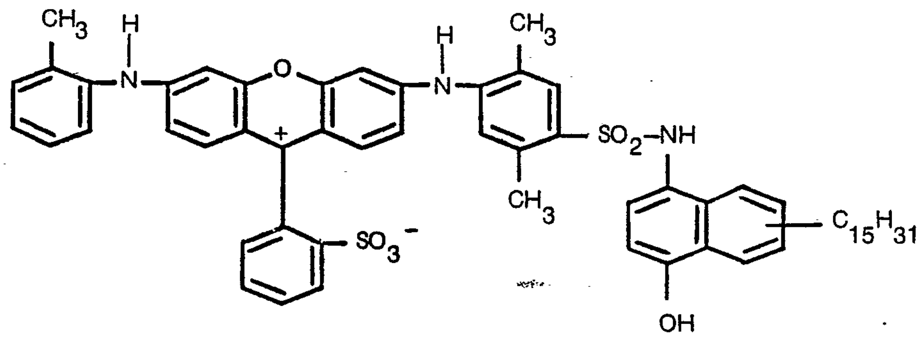

Other sulfonamido phenol or naphthol groups known in the art, e.g., in U. S. Patent No. 4,053,312 issued October 11, 1977 to Fleckstein and in U. S. Patent No. 4,055,428 issued October 25, 1977 to Koyama et al, to cleave, in alkaline solution, at the sulfonamido group following oxidation may be used in place of the p-sulfonamido-naphthol group illustrated above.

U. S. Patent No. 3,719,489 issued March 6, 1973 to Cieciuch, Luhowy, Meneghini and Rogers discloses diffusion transfer processes wherein a diffusible image dye-providing material is formed by the silver-catalyzed cleavage of a thiazolidine group of an initially non-diffusible image dye-providing material. Examples of image dye-providing materials within the scope of this invention and which may be used in said thiazolidine dye-release system include:

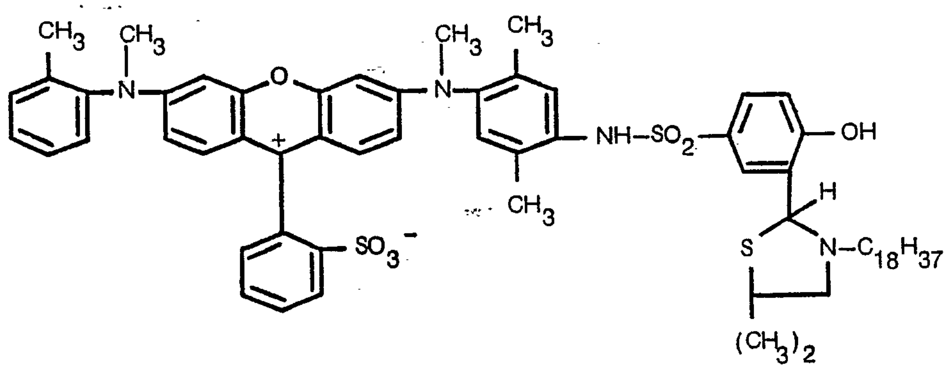

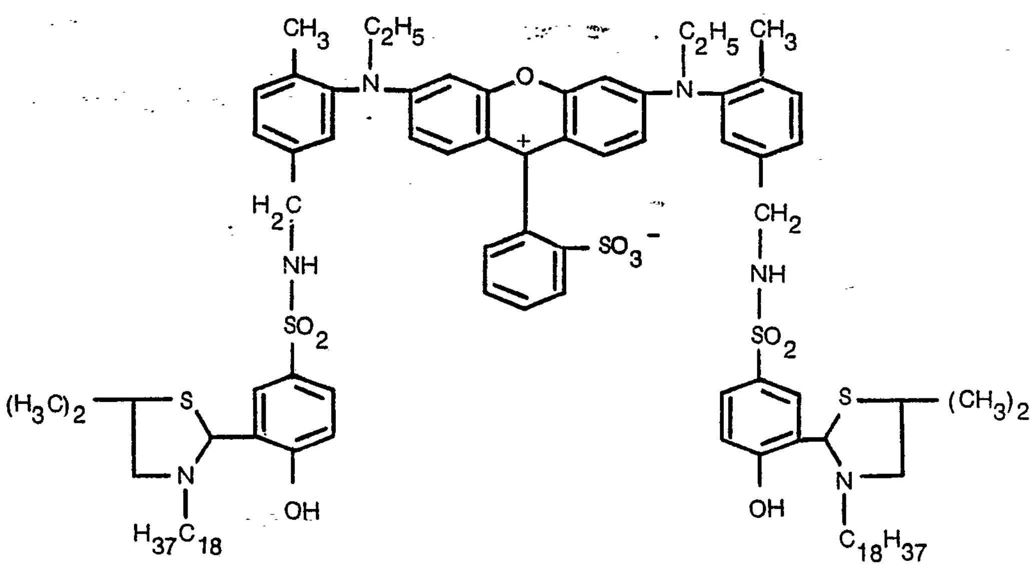

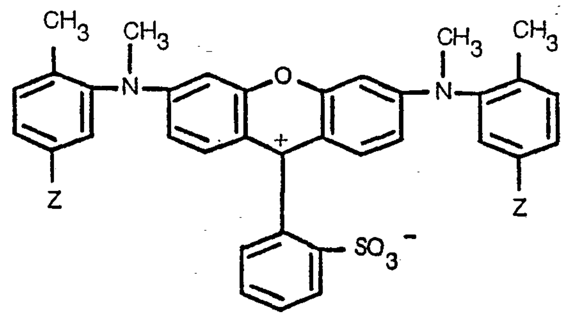

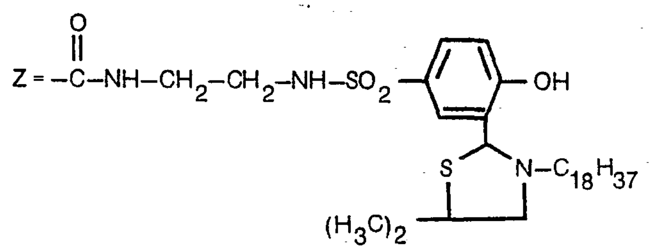

Another class of initially non-diffusible image dye-providing materials are described in U.S. Patent 3,433,939 issued May 13, 1969 to Bloom and Rogers release a diffusible dye following oxidation and intramolecular ring closure. An example of an image dye-providing material within the scope of this invention which may be used in the processes of said patent is

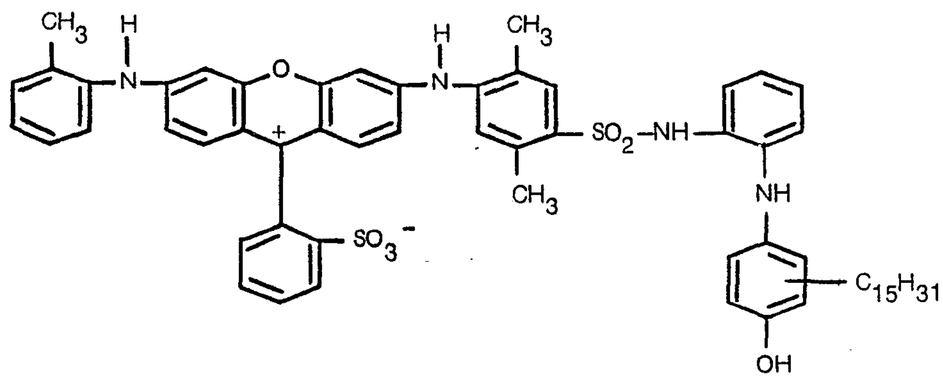

It will be recognized that the above illustrative initially non-diffusible image dye-providing materials may be prepared in a routine manner from, e.g., sulfonyl chloride of the chromophore-containing moiety (e.g., the sulfonyl chloride prepared in Example 3) and the appropriate amino-substituted diffusion control group, the syntheses of which are described in the noted patents and to which reference may be made for detailed descriptions, including photographic utilization.

Other image dye-providing materials which cleave in alkali following oxidation may be provided by use of a compound within Formula D above wherein A is —O— or —S— and the hydroquinonyl group contains a ballast group, e.g.,

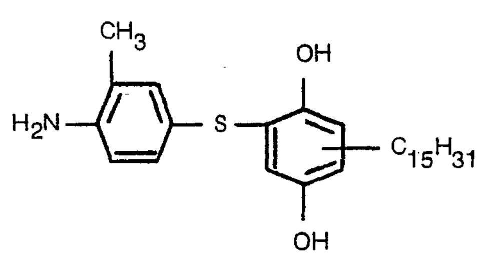

in accordance with the disclosure of U. S. Patent No. 3,725,062 issued April 3, 1973 to Anderson and Lum.

While the ballast group in the above illustrations has been a long chain alkyl group, it will be understood that other ballast groups shown in the cross-referenced patents may also be used.

In the use of a non-diffusible image dye-providing material which releases a diffusible image

dye-providing material following oxidation in an alkaline environment, the requisite oxidation may be effected by the oxidation product of a mobile developing agent used to develop the photoexposed silver halide emulsion. A particularly effective developing agent for this purpose is 1-phenyl-4,4-dimethyl-3-pyrazolidone; other suitable developing agents are described in the cross-referenced patents.

Example 5

A film unit was prepared as follows: the negative element was made up of a polyethylene terephthalate photographic film base with the following layers coated thereon in succession:

1. a magenta dye developer layer at a coverage of 344.4 mg/m² of Dye 19 dispersed in 344.4 mg/m² of cellulose acetate hydrogen phthalate;

2. a green-sensitive gelatino silver iodobromo emulsion coated at a coverage of 807.3 mg/m² of silver and 947.2 mg/m² of gelatin;

3. a layer of 322.9 mg/m² of gelatin.

The image-receiving element comprised a transparent polyethylene terephthalate photographic film base with the following layers coated thereon in succession:

1. as a polymeric acid layer, approximately 9 parts of a half-butyl ester of polyethylene/maleic anhydride copolymer and 1 part of polyvinyl butyral coated at a coverage of about 28.0 g/m² and including an ultraviolet absorbing material;

2. a timing layer containing about 4.84 g/m² of a 60—30—4—6 tetrapolymer of butyl acrylate, diacetone acrylamide, styrene and methacrylic acid including about 7%—8% polyvinyl alcohol; and

3. a polymeric image-receiving layer of: (a) 3 parts of a mixture of 2 parts polyvinyl alcohol and 1 part poly-4-vinylpyridine and (b) 1 part of a graft copolymer comprised of 4-vinylpyridine (4VP) and vinylbenzyl trimethyl ammonium chloride (TMQ) grafted onto hydroyethyl cellulose (HEC) at a ratio of HEC/4VP/TMQ of 2.2/2.2/1 coated at a coverage of about 3.23 g/m².

The film unit was processed with a processing composition comprised of:

| | |
|---|---|
| Water | 1757 g |
| Bis- ($\beta$-aminoethyl)-sulfide | 1.04 ml |
| Titanium dioxide | 2028 g |
| Potassium hydroxide (50% solution) | 308.3 g |
| Carboxymethyl hydroxyethyl cellulose | 51.8 g |
| Benzotriazole | 26.9 g |
| 6-methyluracil | 14.2 g |
| N-Hydroxyethyl-N,N′,N′-tris-carboxymethyl ethylene diamine | 40.2 g |
| 6-methyl-5-bromo-4-azabenzimidazole | 1.34 g |
| 6-benzylaminopurine | 19.0 g |
| Lithium nitrate | 4.72 g |
| Polyethylene glycol (MW 6000) | 26.1 g |
| Colloidal silica (50% aqueous dispersion) | 88.5 g |
| N-benzyl-$\alpha$-picolinium bromide (50% solution) | 121.3 g |
| N-phenethyl-$\alpha$-picolinium bromide (50% solution) | 70.0 g |

The film unit was exposed (2 meter-candle-seconds) on a sensitometer to a test exposure scale with green and blue light and then passed through a pair of rollers at a gap spacing of about 0,05 mm. The unit was allowed to remain in the dark for about 10 minutes. The film unit was kept intact and maximum and minimum reflection densities were measured.

Example 6

The procedure of Example 5 was repeated with the exception that the dye developer layer of the negative element was made up of 301.4 mg/m² of Dye 18 and 301.4 mg/m² of cellulose acetate hydrogen phthalate.

Example 7

The procedure of Example 6 was repeated with the exception that the gelatin layer of the negative element also included 80,7 mg/m² of 4'-methylphenyl hydroquinone.

Example 8

The procedure of Example 5 was repeated with the exception that the dye developer layer of the negative element was made up of 26.5 mg/m² of Dye 2 and 265 mg/m² of cellulose hydrogen phthalate.

Example 9

The procedure of Example 8 was repeated except that the gelatin layer of the negative element also included 80.7 mg/m² of 4'-methylphenyl hydroquinone.

The monochrome, magenta transfer images obtained in Examples 5—10 exhibited the following reflection densities to green light:

| | $D_{max}$ | $D_{min}$ |
|---|---|---|
| Example 5 | 2.09 | 0.69 |
| Example 6 | 2.03 | 0.64 |
| Example 7 | 2.20 | 0.25 |
| Example 8 | 2.22 | 0.57 |
| Example 9 | 2.33 | 0.30 |

Example 10

A multicolour photosensitive element using, as the cyan and yellow dye developers

cyan:

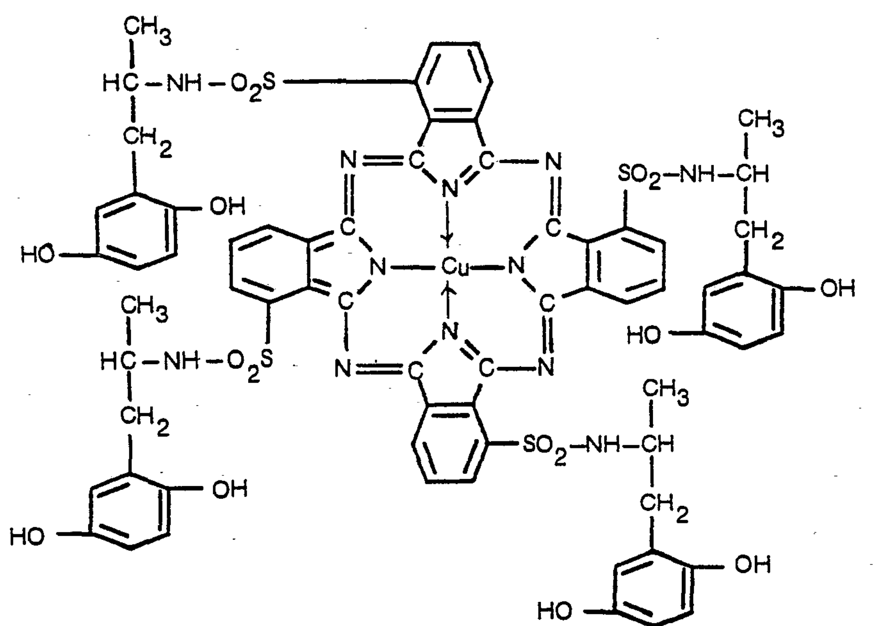

yellow:

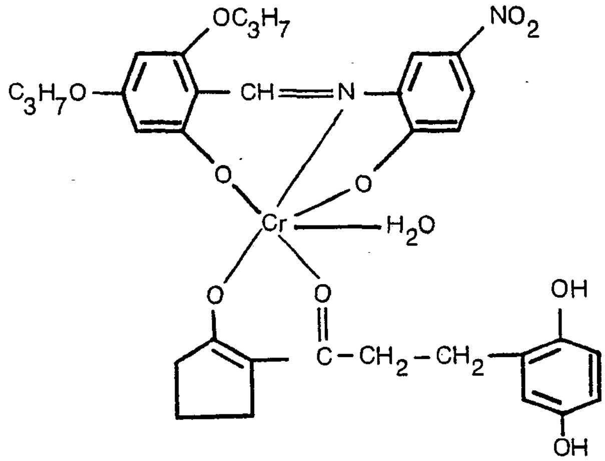

and Dye 18 as the magenta dye developer, by coating a gelatin-subcoated 4 mil opaque polyethylene terephthalate film base with the following layers:

1. a layer of cyan dye developer dispersed in gelatin and coated at a coverage of about 630 mg/$m^2$ of dye, about 391 mg/$m^2$ of gelatin, about 280 mg/$m^2$ of N-n-dodecylaminopurine, and about 88 mg/$m^2$ of 4′-methylphenyl hydroquinone;

2. a red-sensitive gelatino silver iodobromide emulsion coated at a coverage of about 1054 mg/$m^2$ of silver and about 6324 mg/$m^2$ of gelatin;

3. a layer of 95:5 mixture of 60—30—4—6 copolymer of butylacrylate, diacetone acrylamide, styrene and methacrylic acid and polyacrylamide coated at a coverage of about 1076 mg/$m^2$;

4. a layer of magenta dye developer dispersed in gelatin and coated at a coverage of about 648 mg/$m^2$ of dye and about 324 mg/$m^2$ of gelatin;

5. a green-sensitive gelatino silver iodobromide emulsion coated at a coverage of about 749 mg/$m^2$ of silver and about 330 mg/$m^2$ of gelatin;

6. a layer containing the copolymer referred to above in layer 3 and polyacrylamide in a 91:9 ratio coated at a coverage of about 1816 mg/$m^2$;

7. a layer of yellow dye developer dispersed in gelatin and coated at a coverage of about 659 mg/$m^2$ of dye, about 318 mg/$m^2$ of gelatin, and about 108 mg/$m^2$ of N-n-dodecylamino-purine;

8. a blue-sensitive gelatino silver iodobromide emulsion layer coated at a coverage of about 990 mg/$m^2$ of silver, about 495 mg/$m^2$ of gelatin; and

9. A layer of gelatin coated at a coverage of about 320 mg/$m^2$ of gelatin.

A transparent 0,1 mm polyethylene terephthalate film base was coated, in succession, with the following layers to form an image-receiving component:

1. as a polymeric acid layer, a mixture of a partial butyl ester of polyethylene/maleic anhydride copolymer and polyvinyl butyral at a ratio of about 9:1 at a coverage of about 26.9 g/$m^2$;

2. a timing layer containing about 45:0.7 ratio of a 60—30—4—6 copolymer of butylacrylate, diacetone acrylamide, styrene and methacrylic acid and polyvinyl alcohol at a coverage of about 4.84 g/$m^2$ and

3. An image-receiving layer containing a 2:1:1 mixture of polyvinyl alcohol, poly-4-vinyl pyridine and a graft copolymer of 4′-vinyl pyridine and vinylbenzyl trimethyl ammonium chloride on hydroxyethyl cellulose (2.2:1:2.2 ratio) at a coverage oef about 3.23 g/$m^2$. Over the image-receiving layer there was coated about 1.08 g/$m^2$ of a 70:30 mixture of Pluronic F—127® polyoxyethylene polyoxypropylene block copolymer and polyvinyl alcohol as a decolorizing layer. (Such "decolorizing" layers are the subject of the copending application of Edwin H. Land, Leon D. Cerankowski and Neil Mattuci, WO 80/02 333. The photosensitive component was photoexposed and then taped to one end of the image-receiving component with a rupturable container retaining an aqueous alkaline processing solution fixedly mounted on the leading edge of each of the components, by pressure-sensitive tapes to make a film unit, so that, upon application of compressive pressure to the container to rupture the container's marginal seal, its contents would be distributed between the decolorizing layer and the gelatin overcoat layer of the photosensitive component. The aqueous alkaline processing composition comprised:

| | |
|---|---|
| Water | 100 g |
| Potassium hydroxide (85%) | 10.1 g |
| N-phenethyl-$\alpha$-picolinium bromide | 2.6 g |
| Titanium dioxide | 77.1 g |
| 6-methyl uracil | 0.6 g |
| bis-($\beta$-aminoethyl)-suflide | 0.04 g |
| Benzotriazole | 1.1 g |
| Colloidal silica (solids based on 30% $SiO_2$ dispersion) | 0.56 g |
| N-2-hydroxyethyl-N,N',N'-tris-carboxymethyl-ethylene diamine | 1.52 g |
| 4-aminopyrazolo (3,4d)pyrimidine | 0.51 g |
| polyethylene glycol (molecular weight about 4000) | 0.91 g |
| poly-diacetone acrylamide oxime | 1.6 g |
| 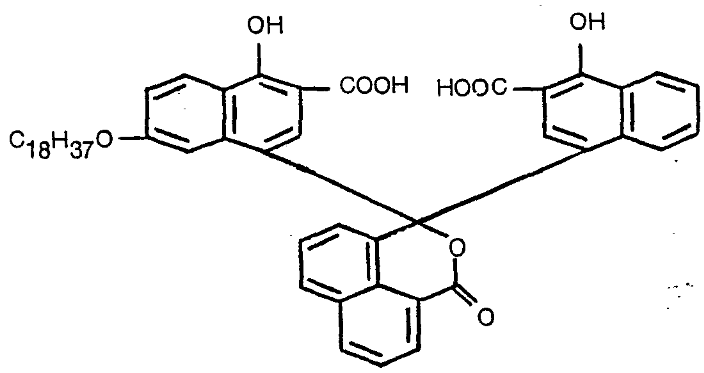 | 2.74 g |
| 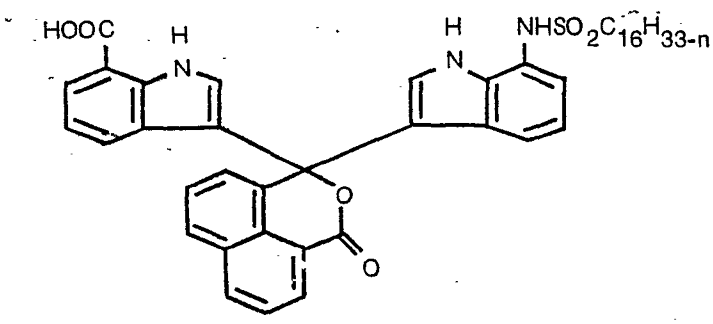 | 0.6 g |

A layer approximately 0,076 mm thick of the processing composition was distributed by passing the film unit between a pair of pressure-applying rolls and into a lighted area. The resulting laminate was maintained intact to provide a multicolor integral negative-positive reflection print which exhibited a good color quality and separation.

Example 11

Dye 18 was prepared as follows:
10 g of a xanthene dye represented by the formula

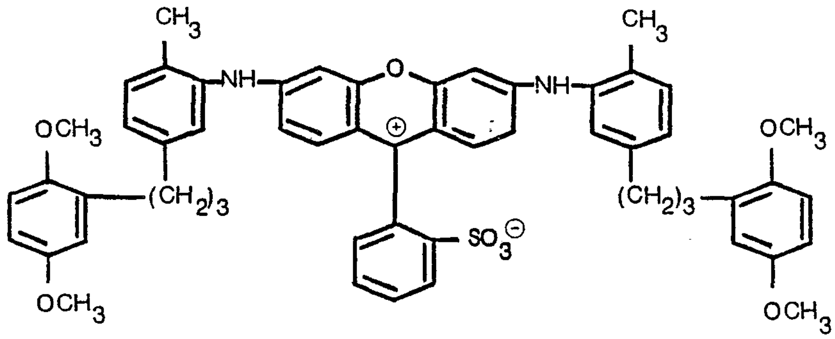

was suspended in 75 ml of dimethyl sulfoxide at room temperature under nitrogen gas. To this suspension there was added 1.8 g of a 50% sodium hydride dispersion in oil and the mixture stirred for 30 minutes at room temperature. A blue solution developed. To the solution there was added 10 g of a tosylate compound represented by the structural formula

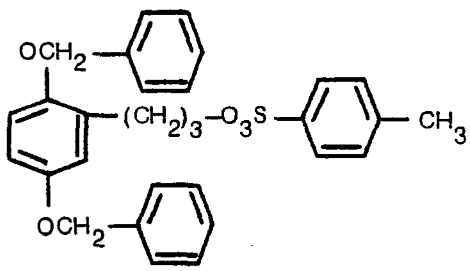

and the solution stirred for 3 hours at room temperature. TLC on silica gel with 5/95 methanol/methylene chloride, by volume, showed that none of the dye intermediate remained. Methyl iodide (2 ml) was added and the mixture was stirred for one hour. TLC showed that the reaction was complete. The reaction mixture was poured into 1 liter of water containing 1 ml of conc. HCl and the precipitate was filtered off. The precipitate was placed back into water, stirred well, collected by filtration and vacuum dried to give 14.0 g. The product was dissolved in 400 ml of methylene chloride and 125 g of silica gell added to the solution. The stirred mixture was placed in a sintered glass funnel and filtered while washing with methylene chloride. The dye was then extracted with 5/95 methanol/methylene chloride, by volume and evaporated to dryness. The dye is represented by the structural formula

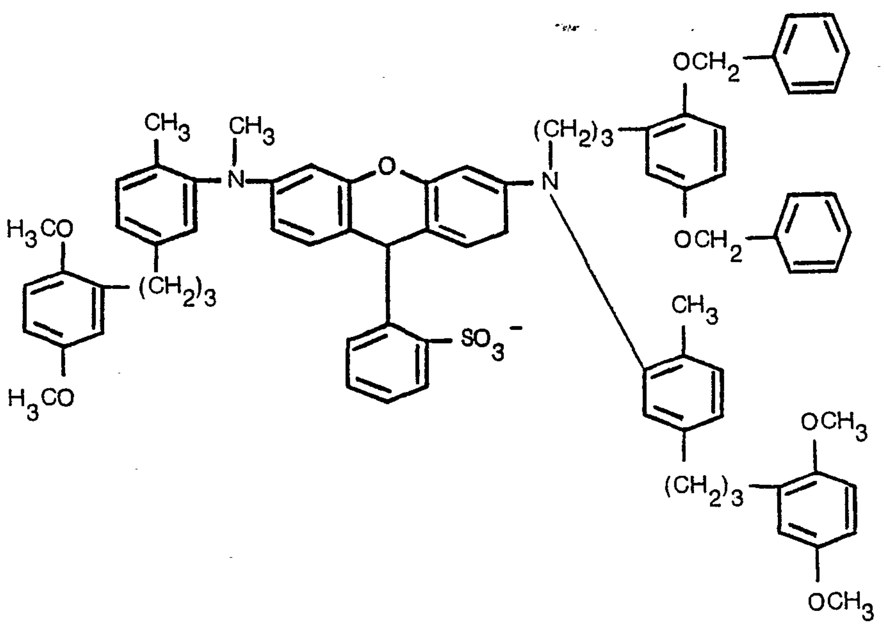

A solution of 5.0 g of the thus-prepared dye in 100 ml of methylene chloride was added to a stirred solution of 15 ml of boron tribromide in 500ml of methylene chloride, under nitrogen and cooled to 5°C. The magenta solution was allowed to warm to room temperature. TLC on silica gel shows two spots. A sample of the solution was heated to reflux with no apparent change in the TLC results. Water was added dropwise to the solution and a magenta precipitate formed. The precipitate was collected by filtration, washed well with methylene chloride and vacuum dried at 80°C to give 9.0 g of solid. The solid was dissolved in methanol containing several drops of conc. HCl, refluxed, and poured into 1000 ml of ether. The precipitate was collected by filtration and dried to give 3.8 g of product.

The 3.8 g sample was placed on 60 g of sea sand with methanol. The mixture was placed in a steel column and an additional 250 g of sea sand were added. The column was placed on line on a high pressure chromatography unit and washed with a succession of solvents as follows (parts are by volume):

1 liter methylene chloride
2 liters 1/99 methanol/methylene chloride
4 liters 2/98 methanol/methylene chloride
4 liters 3/97 methanol/methylene chloride
12 liters 5/95 methanol/methylene chloride
3 liters 6/94 methanol/methylene chloride

The appropriate solvent fractions as determined by thin layer chromatography were collected and evaporated to give 1.8 g of the dye developer.

TLC of the material showed traces of impurities. The sample was again placed on 60 g of sea sand and placed back in the steel column (which was first washed with 9/91 methanol/methylene chloride, by volume, and then with methylene chloride). The column was washed with a succession of solvents as follows (parts are by volume):

1 liter methylene chloride
3 liters 2/98 methanol/methylene chloride
3 liters 3/97 methanol/methylene chloride
1 liter 4/96 methanol/methylene chloride
10 liters 4/96 methanol/methylene chloride
3 liters 6/94 methanol/methylene chloride

The appropriate solvent fractions as determined by thin layer chromatography were collected and evaporated to give 1.7 g of Dye 18 which was shown to be pure by TLC. The product exhibited maximum absorption in methyl cellosolve at 553 nm, $\varepsilon = 117{,}500$. An NMR spectrum of the product confirmed the structure.

## Example 12

A film unit was prepared as follows:

The photosensitive element comprised an opaque subcoated polyethylene terephthalate film base on which the following layers were coated in succession:

(1) a layer of sodium cellulose sulfate coated at a coverage of about 21 mg/m²;

(2) a cyan dye developer layer comprising about 635 mg/m² of the cyan dye developer used in Example 11, about 429 mg/m² of gelatin, about 238 mg/m² of dodecylaminopurine and about 128 mg/m² of 4'-methylphenyl hydroquinone;

(3) a red-sensitive gelatino silver iodobromide (1.8 μm) emulsion layer coated at a coverage of about 190 mgs/² of silver and about 1140 mg/m² of gelatin;

(4) an interlayer comprising about 2000 mg/m² of a 60—30—4—6 tetrapolymer of butylacrylate, diacetone acrylamide, styrene and methacrylic acid and about 30 mg/m² of polyacrylamide;

(5) a magenta dye developer layer comprising about 666 mg/m² of Dye 18, about 323 mg/m² of gelatin and about 150 mg/m² of dodecylaminopurine;

(6) a green-sensitive silver iodobromide (1.11 μm) emulsion layer coated at a coverage of about 700 mg/m² of silver and about 308 mg/m² of gelatin;

(7) a green-sensitive silver iodobromide (1.8 μm) emulsion layer coated at a coverage of about 600 mg/m² of silver and about 288 mg/m² of gelatin;

(8) an interlayer comprising about 1380 mg/m² of a 60—30—4—6 tetrapolymer of butylacrylate, diacetone acrylamide, styrene and methacrylic acid and about 30 mg/m² of polyacrylamide;

(9) a spacer layer comprising about 285 mg/m² of 2-phenylbenzimidazole and about 142.5 mg/m² of gelatin;

(10) a yellow dye developer layer comprising about 820 mg/m² of the yellow dye developer used in Example 11 and about 328 mg/m² of gelatin;

(11) a blue-sensitive silver iodobromide (1.5 μm) layer coated at a coverage of about 1050 mg/m² of silver, 660 mg/m² of gelatin and about 306 mg/m² of 4-methylphenyl hydroquinone; and

(12) an overcoat layer of about 484 mg/m² of gelatin.

The image-receiving element comprised a transparent subcoated polyethylene terephthalate film base on which the following layers were coated in succession;

(1) as a polymeric acid layer approximately 9 parts of a 1/2 butyl ester of polyethylene/maleic anhydride copolymer and 1 part of polyvinyl butyral coated at a coverage of about 26.4 g/m²;

(2) a timing layer coated at a coverage of about 2.9 g/m² of a 60—30—4—6 tetrapolymer of butylacrylate, diacetone acrylamide, styrene and methacrylic acid and about 323 mg/m² polyvinyl alcohol;

(3) a polymeric image-receiving layer coated at a coverage of about 108 mg/m² of 1,4-butanediol diglycidyl ether and about 3.23 g/m² of: (a) 3 parts of a mixture of 2 parts polyvinyl alcohol and 1 part poly-4-vinyl pyridine and (b) 1 part of a graft copolymer comprised of 4-vinyl pyridine (4VP) and vinyl benzyl trimethyl ammonium chloride (TMQ) grafted onto hydroxyethyl cellulose (HEC) at a ratio HEC/4VP/TMQ 2.2/2.2/1; and

(4) a topcoat layer of polyvinyl alcohol coated at a coverage of about 430 mg/m².

A second film unit was prepared which was identical with the exception that the magenta dye developer layer included about 540 mg/m² of Dye 2 instead of Dye 18.

The amounts of Dyes 2 and 18 used in the above film units were chosen so as to provide substantially equivalent molar amounts of the dye developers. Thus $617 \times 10^{-5}$ mole of Dye 18 (MW 1011) and $617 \times 10^{-5}$ mole of Dye 2 (MW 875) were present in the respective film units.

The film units were exposed on a sensitometer to a test exposure scale with white light and then processed by passing them through a pair of rollers so as to distribute a layer of the following processing composition approximately 0.076 mm thick between the superposed photosensitive and image-receiving elements:

| | |
|---|---|
| Water | 1622 ml |
| $TiO_2$ | 2312.0 g |
| Oximated polydiacetone acrylamide | 32.0 g |
| Potassium hydroxide (45% solution) | 486.6 g |
| Benzotriazole. | 22.0 g |
| 4-Aminopyrazolo-(3,4d) pyrimidine | 10.0 g |
| 6-methyl uracil | 12.0 g |
| N-hydroxyethyl-N,N',N'-tris-carboxymethyl ethylene diamine | 30.0 g |
| Polyethylene glycol (M.W. 4000) | 18.0 g |
| Bis(2-aminoethyl)sulfide | 0.8 g |
| Colloidal silica (30% solids) | 37.0 g |
| N-phenylethyl-$\alpha$-picolinium bromide (50% solids) | 102.0 g |

Since the processing composition did not contain opacifying dyes the film units were kept in the dark for a period of about five minutes after the processing composition was applied. The reflection densities of the neutral area of the images were:

| | | Red | Green | Blue |
|---|---|---|---|---|
| Dye 18: | $D_{max}$ | 1.87 | 2.36 | 2.18 |
| | $D_{min}$ | 0.12 | 0.16 | 0.24 |
| Dye 2: | $D_{max}$ | 1.82 | 1.88 | 2.12 |
| | $D_{min}$ | 0.12 | 0.15 | 0.26 |

It will be noted that Dye 18 gave a much higher transfer density than Dye 2. It has been determined that Dye 2 transfers at a much slower rate than Dye 18. Since the dyes are insolubilized by the pH reduction effected after a predetermined time by the polymeric acid neutralizing layer, it will be apparent that the difference in the magenta transfer duty is due to the combination of the difference in transfer rates and the pH reduction. Other experiments have shown that if the pH is not reduced, i.e., the neutralizing layer is omitted, substantially similar transfer densities may be obtained even though the rate of density

build-up is slower. Similar experiments have also shown that the transfer rate of Dye 2 also is reduced by the presence in the processing composition of opacifying dyes such as used in Example 5.

The magenta image dyes provided by this invention have been found to provide very desirable spectral properties, particularly high green absorption and high blue transmission, together with high extinction coefficients, thereby providing multicolor images exhibiting improved reproduction of blues, greens and pastel colors. The preferred magenta dyes of this invention exhibit maximum absorption at about 540 to 555 nanometers (dissolved in methyl celosolve) and have a narrow band width. The dye developers of this invention have been found to give very good transfer control, with very good deltas between maximum and minim densities. While it is general practice in dye developer transfer processes to have an auxiliary developing agent, e.g., 4'-methylphenyl hydroquinone present, it has been found that the dye developers of this invention exhibit very good silver halide developing action without such auxiliary developing agents, and that the total amount of auxiliary developing agent in a given system therefore may be reduced. In turn, this reduces the potential for stain in highlight regions of the transfer image due to oxidized auxiliary developing agent. It has also been observed that the oxidized form of these dye developers, illustrated for example by Dyes 2 and 18, exhibits a large difference in alkali solubility compared with the unoxidized form. The dye developers of this invention also exhibit a strong resistance to post-processing transfer, e.g., solubilization and transfer after pH-reduction to impart a stain or "pinking" to highlight areas. While the reasons for these desirable properties are not well understood, it is believed that the presence of the positive charge associated with the nucleus is a significant factor.

Dyes of similar chromophoric systems, commonly referred to as rhodamine or xanthene dyes, tend to exhibit fluorescence, an undesirable property. N-alkalation has tended to increase fluorescence. The presence of a phenolic group, particularly a hydroquinonyl group, unexpectedly has been found to reduce fluorescence, particularly where X' is not hydrogen.

In the above examples the neutralizing timing layers were positioned between the image-receiving layer and its transparent support. In certain embodiments it is advantageous to position the neutralizing and timing layers in the photosensitive element, i.e., between the cyan dye developer layer and the opaque support, in the manner described in U. S. Patent No 3,573,043 issued March 30, 1971 to Edwin H. Land.

It will also be understood that the image dye-providing materials of this invention may be used in film structures of the type described in U.S. Patent No. 3,594,165 issued July 20, 1971 to Howard G. Rogers.

## Claims

1. A photosensitive element comprising a support, a silver halide emulsion in a layer carrierd by said support, and an image dye-providing material in a layer carried by said support on the same side thereof as said silver halide emulsion, said image-dye-providing material containing at least one diffusion control moiety and providing a magenta image dye characterised in that said image-dye-providing material contains the chromophoric system represented by the formula:

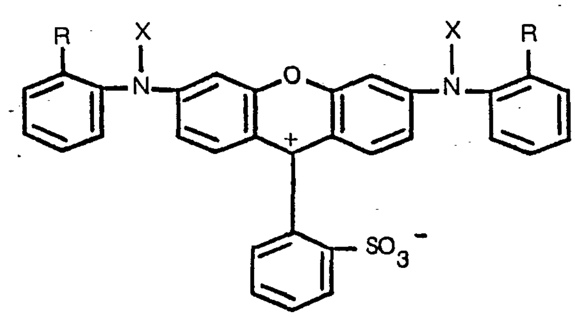

wherein each R is the same or different and is an alkyl group, and each X is the same or different and is hydrogen, an alkyl group or a substituted alkyl group.

2. A photosensitive element as defined in claim 1 wherein each R is an alkyl group and each X is an alkyl group.

3. A photosensitive element as defined in claim 1 wherein said image dye-providing material is a compound of the formula:

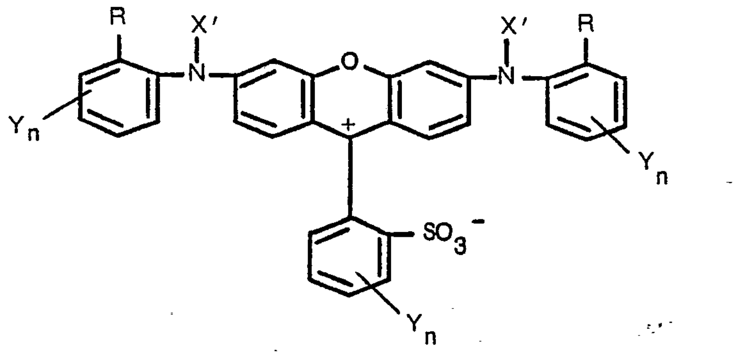

wherein each Y is a diffusion control substituent containing a diffusion control moiety D providing, as a function of development of exposed light-sensitive silver halide, a diffusible or non-diffusible dye or dye intermediate, X′ is hydrogen, alkyl or $-(CH_2-X^2-D)_n$ wherein $X^2$ is a divalent linking group, and n is 0 or 1, provided that at least one n is 1.

4. A photosensitive element as defined in claim 3 wherein said image dye-providing material is a magenta dye developer, said diffusion control moiety D being a silver halide developing moiety.

5. A photosensitive element as defined in claim 3 wherein said diffusion control substituent Y is the group —A—D, wheriën A is a covalent bond or a divalent linking group, and each D is a hydroquinonyl group.

6. A photosensitive element as defined in claim 3 wherein said diffusion control moiety D is a color coupling moiety.

7. A photosensitive element as defined in claim 3 wherein said diffusion control moiety D is a sulfonamidophenol group.

8. A photosensitive element as defined in claim 3 wherein said diffusion control moiety D is a thiazolidine group.

9. A photosensitive element as defined in claim 4 wherein said photosensitive element comprises a red-sensitive silver halide emulsion associated with a cyan dye developer, a green-sensitive silver halide emulsion associated with said magenta dye developer, and a blue-sensitive silver halide emulsion associated with a yellow dye developer.

10. A photosensitive element as defined in claim 2 wherein X′ is aralkyl.

11. A photosensitive element as defined in claim 3 wherein said dye developer is selected from the group consisting of:

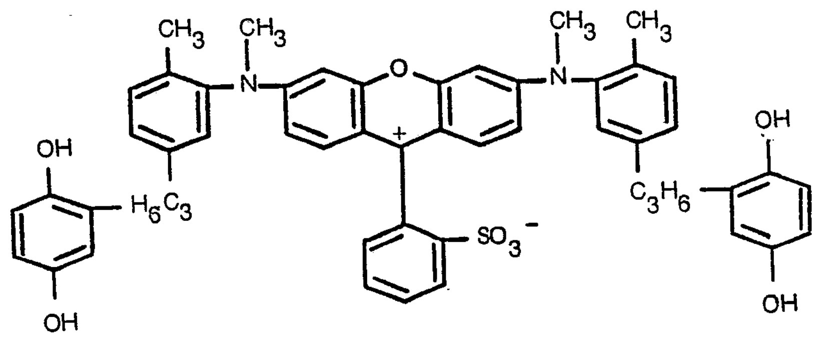

;

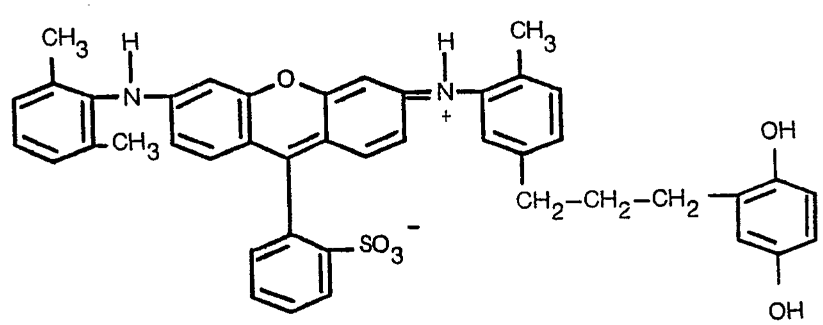

;

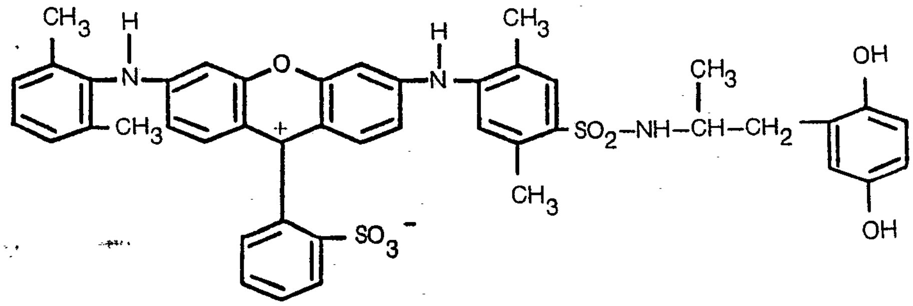
;

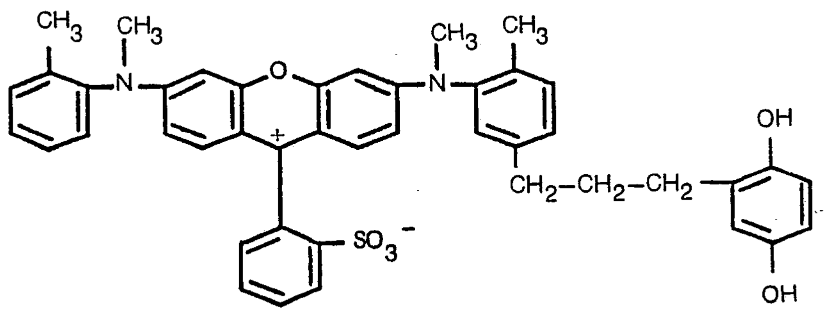
;

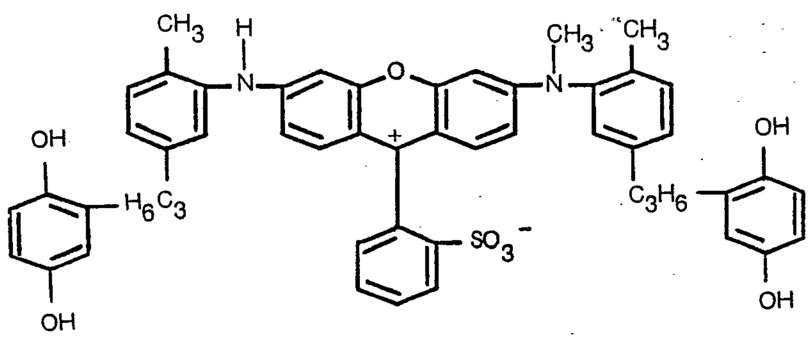
;

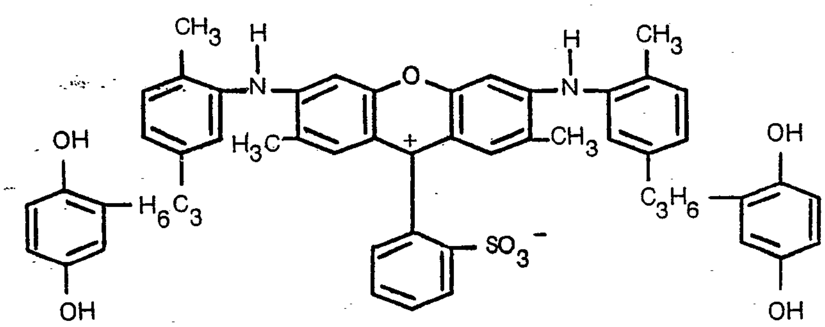
;

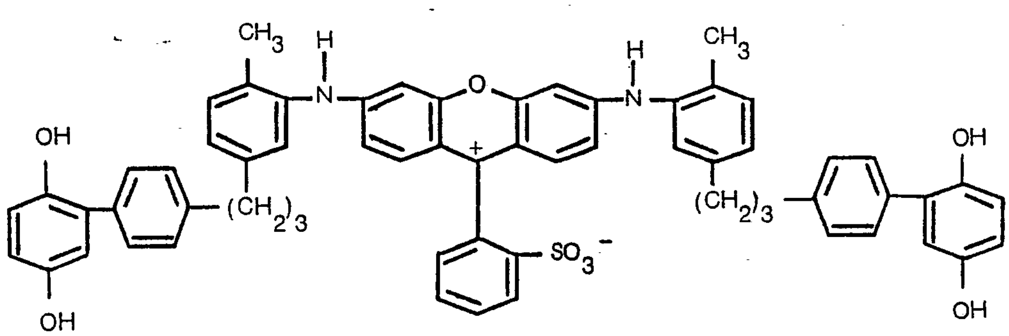
;

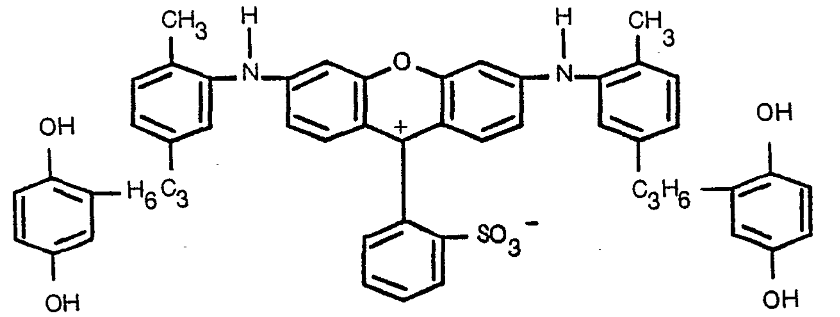

;

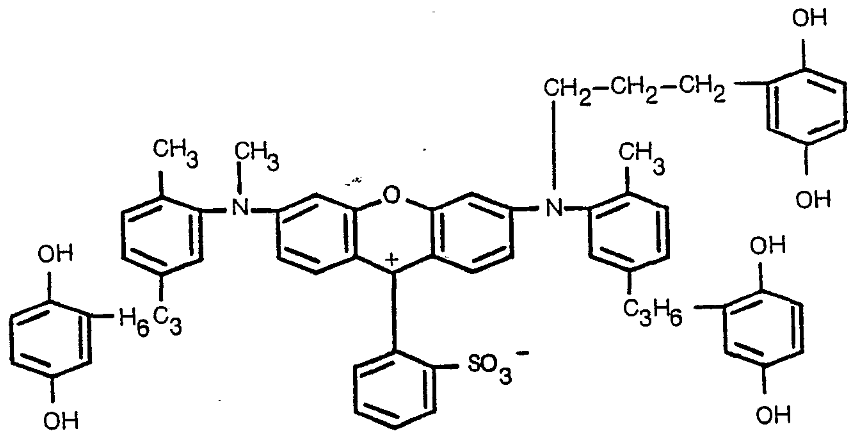

and

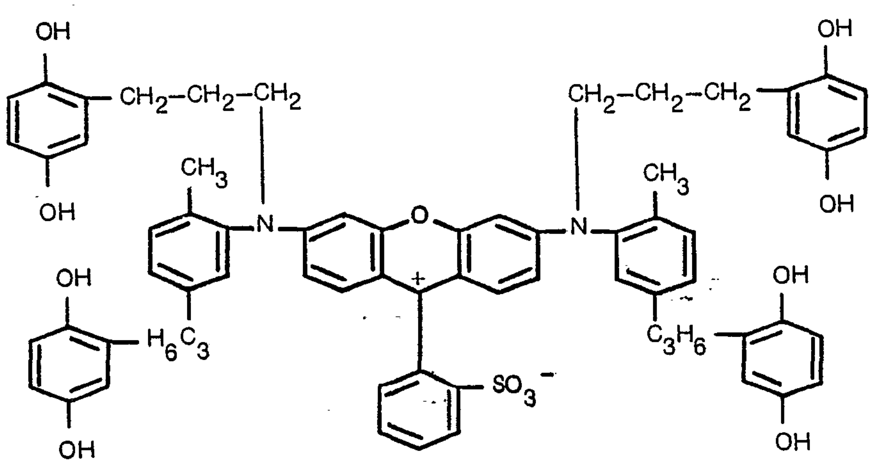

12. A film unit for forming a diffusion transfer color image, said film unit comprising, in combination, a first sheet-like element comprising a photosensitive element as defined in any of the preceding claims; a second sheet-like element adapted to be superposed on said photosensitive element during or after photoexposure; an image-receiving layer positioned in one of said elements; and a rupturable container releasably holding an aqueous alkaline processing composition and so positioned as to be adapted to distribute said processing composition between predetermined layers of said elements.

13. A film unit as defined in claim 12 wherein said second sheet-like element is transparent and is superposed on said first sheet-like element prior to photoexposure so that photoexposure of said photosensitive element is effected through said second sheet-like element.

14. A film unit as defined in claim 13 wherein said second sheet-like element comprises said image-receiving layer carried on a transparent support, and said processing composition includes a light-reflecting pigment adapted to provide a white background against which an image formed in said image-receiving layer may be viewed through said transparent support without separating said superposed sheet-like elements.

15. A film unit as defined in claim 13 wherein the support for said photosensitive element is

transparent, said image-receiving layer is positioned in said photosensitive element adjacent said transparent support, and a layer of a light-reflecting pigment is positioned between said image-receiving layer and said silver halide emulsion layer and said image dye-providing material to provide a white background against which an image formed in said image-receiving layer may be viewed through said transparent support.

16. A photographic image containing a magenta image dye, characterised in that said magenta image dye contains the chromophoric system represented by the formula:

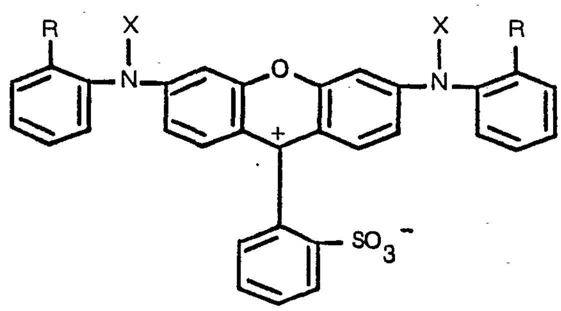

wherein each R is the same or different and is an alkyl group, and each X is the same or different and is hydrogen, an alkyl group or a substituted alkyl group.

17. A photographic image as defined in claim 16 wherein each R is an alkyl group and each X is an alkyl group.

18. A diffusion transfer color process wherein a photosensitive element containing a silver halide emulsion and an image dye-providing material is exposed and developed with an aqueous alkaline processing composition, and an imagewise distribution of a diffusible image dye is formed from said image dye-providing material as a function of said development, and at least a portion of said imagewise distribution of diffusible image dye is transferred to an image-receiving layer in superposed relationship with said silver halide emulsion to provide a diffusion transfer dye image, characterised in that said photosensitive element is a photosensitive element according to any claims 1 to 11.

19. A diffusion transfer color process as defined in claim 18 wherein said image dye-providing material is diffusible in said aqueous alkaline processing composition.

20. A diffusion transfer color process as defined in claim 18 wherein said image dye-providing material is non-diffusible in said aqueous alkaline processing composition.

21. A diffusion transfer color process as defined in claim 20 wherein said image dye-providing material is nondiffusible and said diffusion control moiety D is a sulfonamido phenol group.

22. A compound of the formula

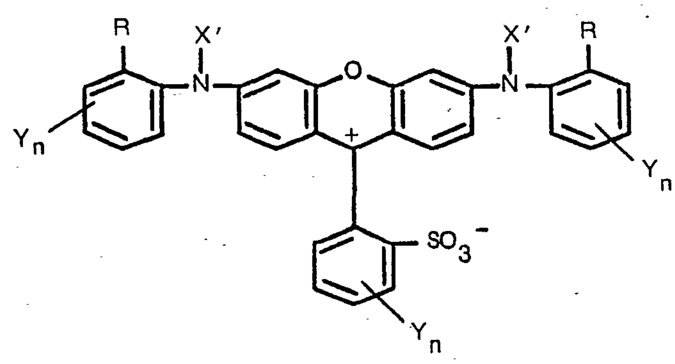

wherein each R is the same or different and is an alkyl group wherein each Y is a diffusion control substituent containing a diffusion control moiety D providing, as a function of development of exposed light-sensitive silver halide, a diffusible or non-diffusible dye or dye intermediate, X' is hydrogen, alkyl or $-(CH_2-X^2-D)_n$ wherein $X^2$ is a divalent linking group, and n is 0 or 1, provided that at least one n is 1.

23. A compound as defined in claim 22 wherein X' is not hydrogen.

24. A compound as defined in claim 22 wherein said compound is a magenta dye developer, said diffusion control moiety D being a silver halide developing moiety.

25. A compound as defined in claim 24 wherein said diffusion control substituent Y is the group —A—D, wherein A is a covalent bond or a divalent linking group, and each D is a hydroquinonyl group.

26. A compound as defined in claim 22 wherein said diffusion control moiety D is a color coupling moiety.

27. A compound as defined in claim 22 wherein said diffusion control moiety D is a sulfonamido phenol group.

28. A compound as defined in claim 22 wherein said diffusion control group is a thiazolidine group.

29. A compound as defined in claim 24 having the formula selected from the group consisting of:

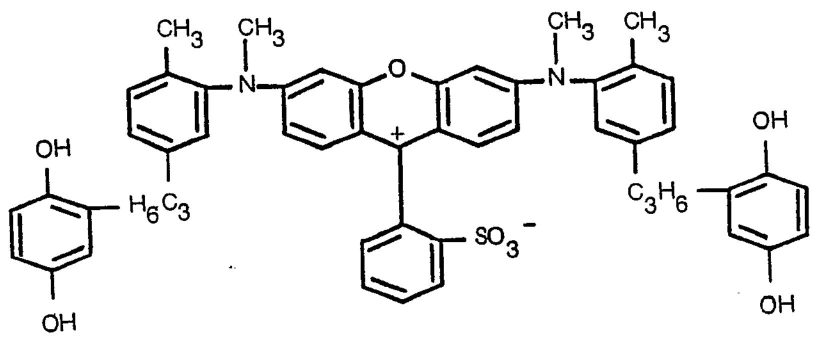

;

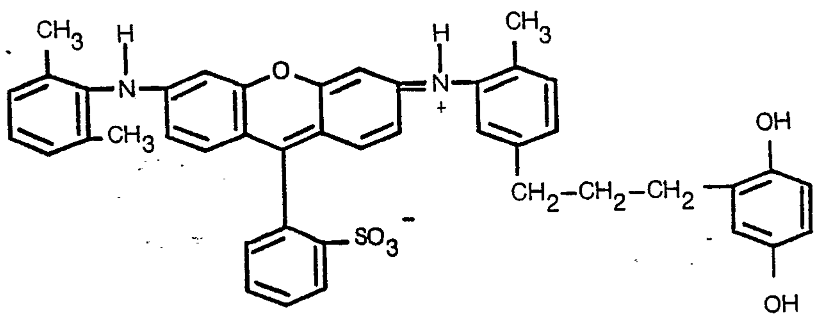

;

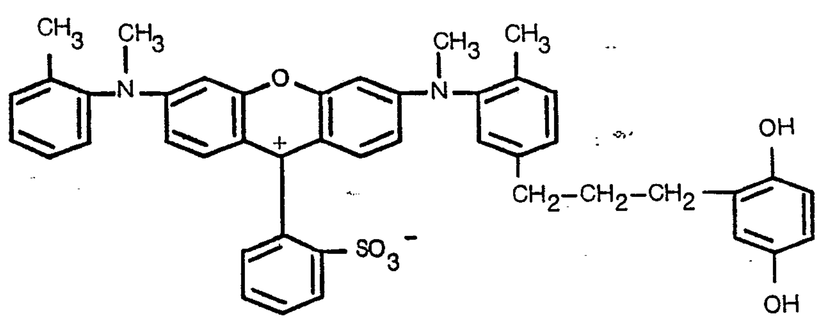

;

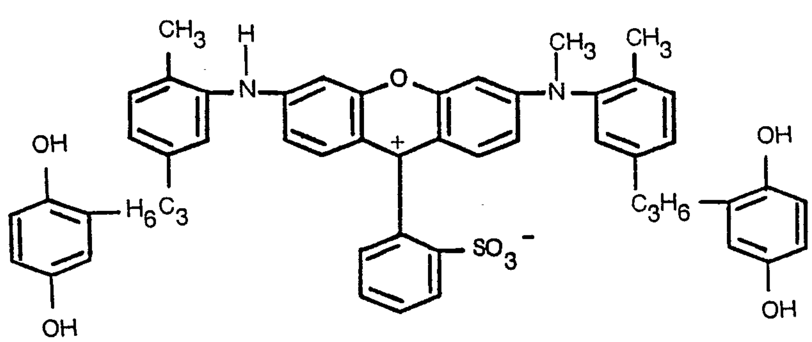

;

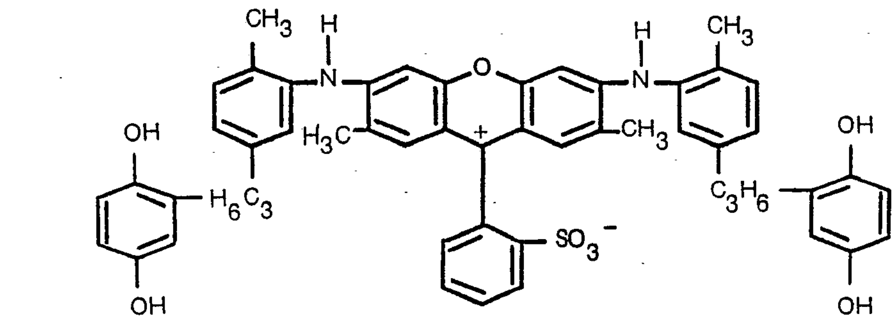

;

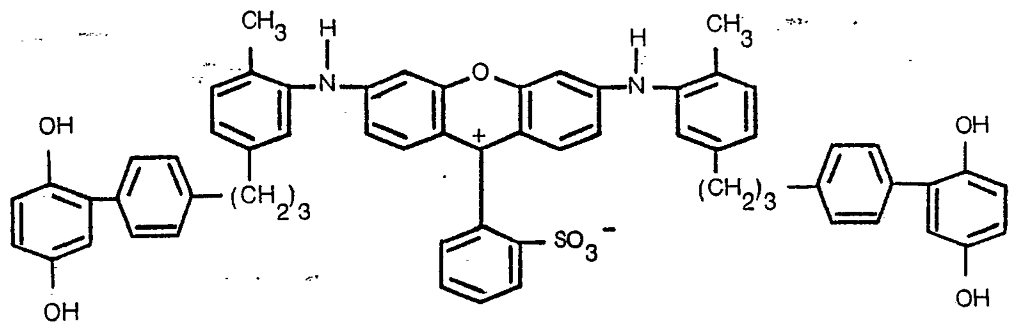

;

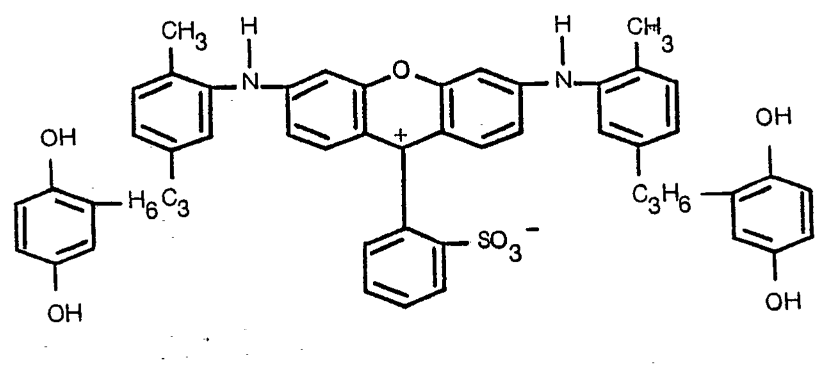

;

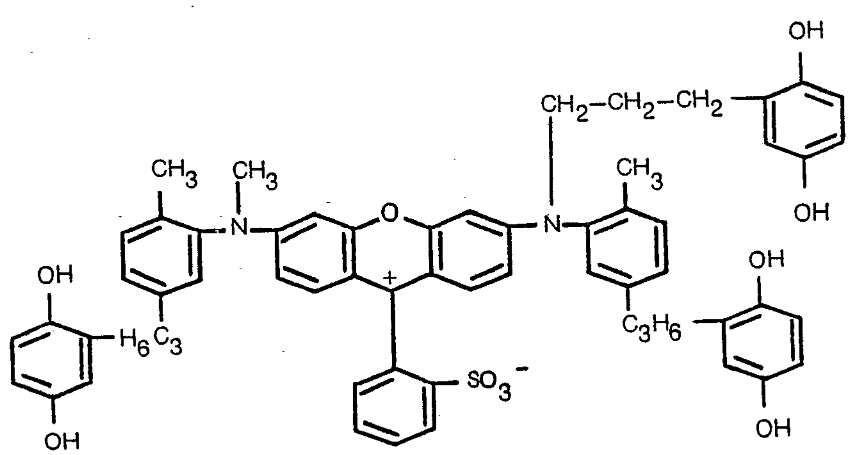

and

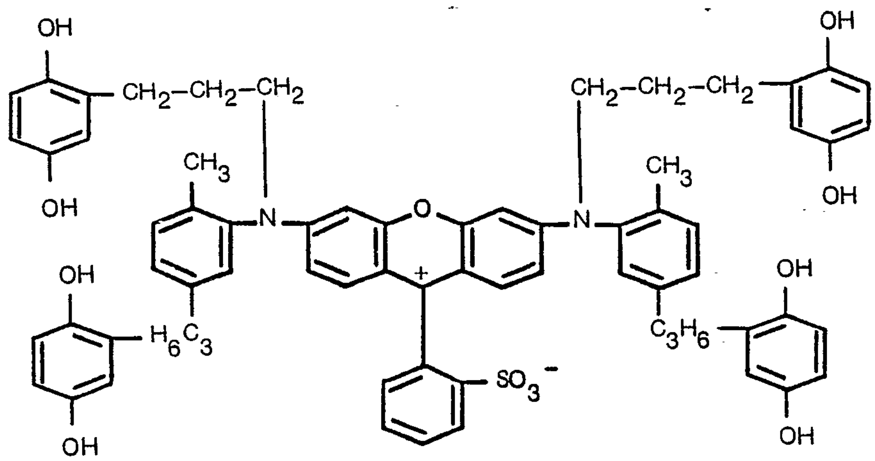

**Revendications**

1. Elément photosensible comprenant un support, une émulsion d'halogénure d'argent dans une couche portée par ledit support, et une matière donnant un colorant d'image dans une couche portée par ledit support du même côté de celui-ci que ladite émulsion d'halogénure d'argent, ladit matière donnant un colorant d'image contenant au moins une partie pour régler la diffusion et donnant un colorant d'image magenta, caractérisé par le fait que ladite matière donnant le colorant d'image contient le système chromophore représenté par la formule:

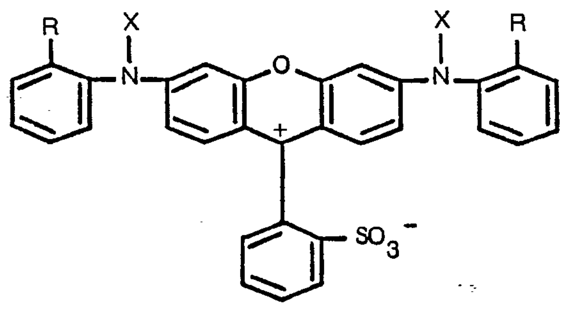

dans laquelle chaque R est identique ou différent et représente un groupe alkyle, et chaque X est identique ou différent et représente de l'hydrogène, un groupe alkyle ou un groupe alkyle substitué.

2. Elément photosensible selon la revendication 1, dans lequel chaque R est un groupe alkyle et chaque X est un groupe alkyle.

3. Elément photosensible selon la revendication 1, dans lequel ladite matière donnant un colorant d'image est un composé ayant la formule:

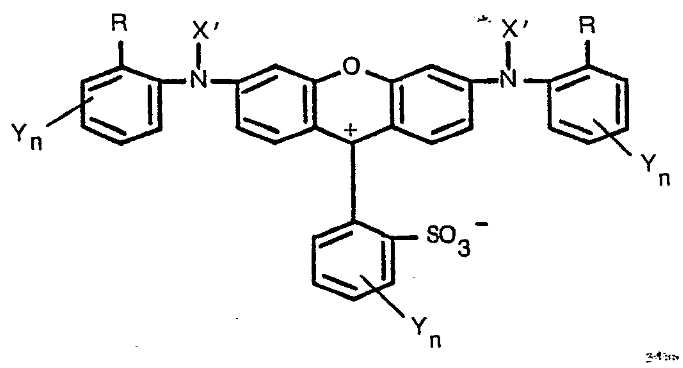

dans laquelle chaque Y est un substituant de réglage de diffusion contenant un fragment D de réglage de diffusion donnant, en fonction du développement de l'halogénure d'argent photosensible exposé, un colorant ou un intermédiaire de colorant, diffusibles ou non diffusibles; X' est de l'hydrogène, un groupe alkyle ou $-(CH_2-X^2-D)_n$ dans lequel $X^2$ est un groupe de liaison divalent, et n est 0 ou 1 pourvu qu'au moins un des n soit 1.

4. Elément photosensible selon la revendication 3, dans lequel ladite matière donnant un colorant d'image est un développateur chromogène magenta, ledit fragment D de réglage de diffusion étant un fragment développant l'halogénure d'argent.

5. Elément photosensible selon la revendication 3, dans lequel ledit substituant Y de réglage de diffusion est le groupe —A—D dans lequel A est une liaison covalente ou un groupe de liaison divalent et chaque D est un groupe hydroquinonyle.

6. Elément photosensible selon la revendication 3, dans lequel ledit fragment D de réglage de diffusion est un fragment de copulation coloré.

7. Elément photosensible selon la revendication 3, dans lequel ledit fragment D de réglage de diffusion est un groupe sulfamidophénol.

8. Elément photosensible selon la revendication 3, dans lequel ledit fragment D de réglage de diffusion est un groupe thiazolidine.

9. Elément photosensible selon la revendication 4, dans lequel ledit élément photosensible comprend une émulsion d'halogénure d'argent sensible au rouge associée à un développateur chromogène cyan, une émulsion d'halogénure d'argent sensible au vert associée à un développateur chromogène magenta, et une émulsion d'halogénure d'argent sensible au bleu associée à un développateur chromogène jaune.

10. Elément photosensible selon la revendication 2, dans lequel X' est un groupe aralkyle.

11. Elément photosensible selon la revendication 3, dans lequel ledit développateur chromogène est choisi parmi le groupe comprenant:

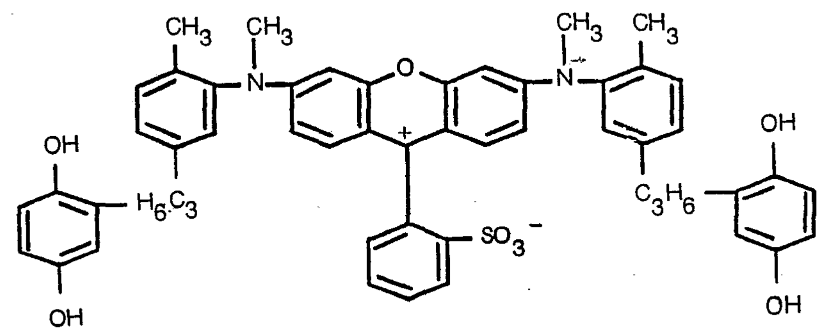
;

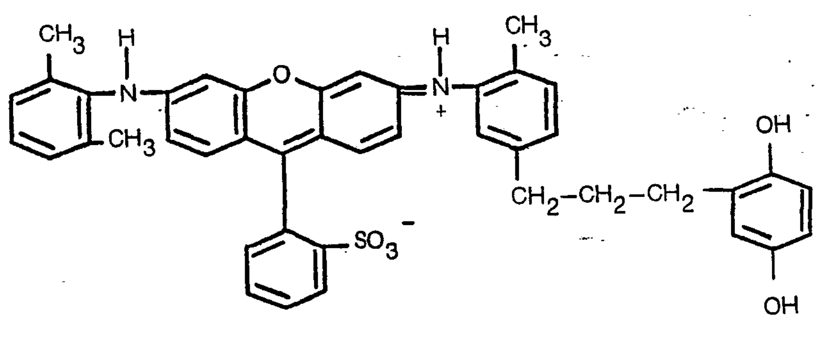
;

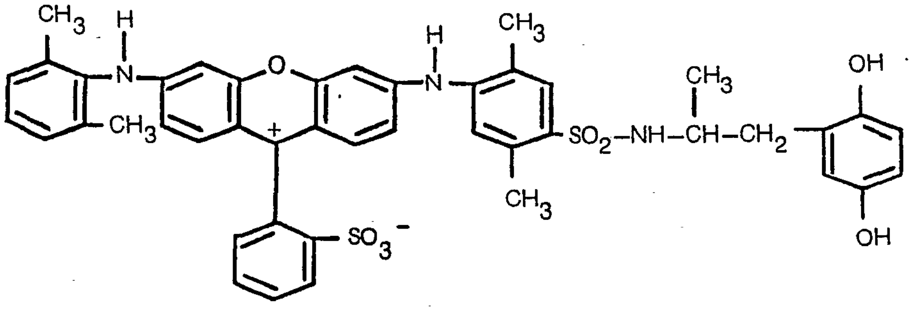
;

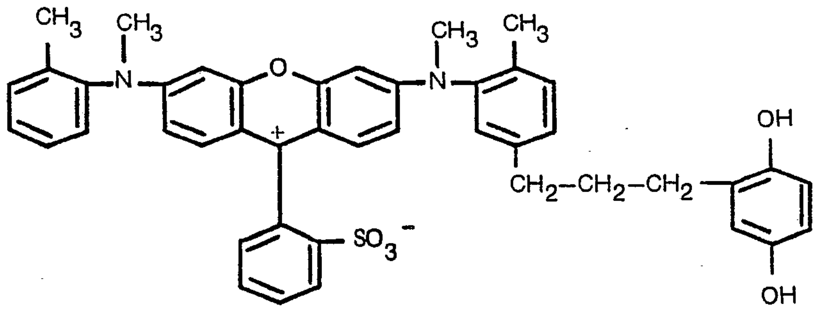

;

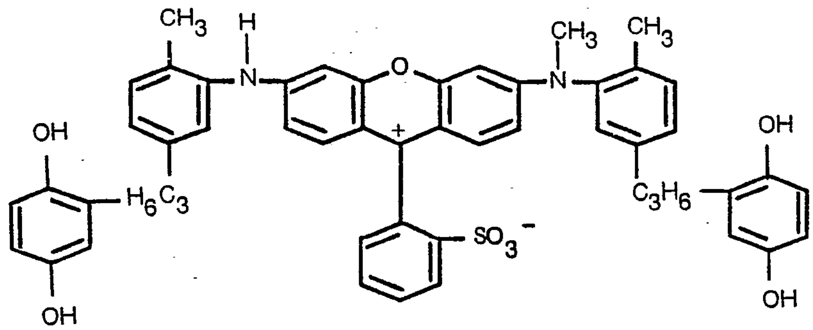

;

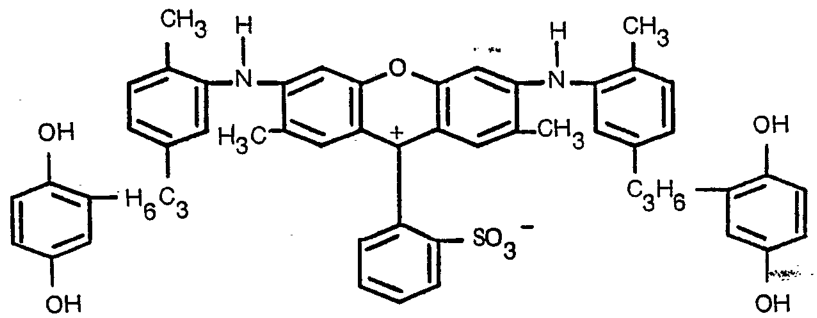

;

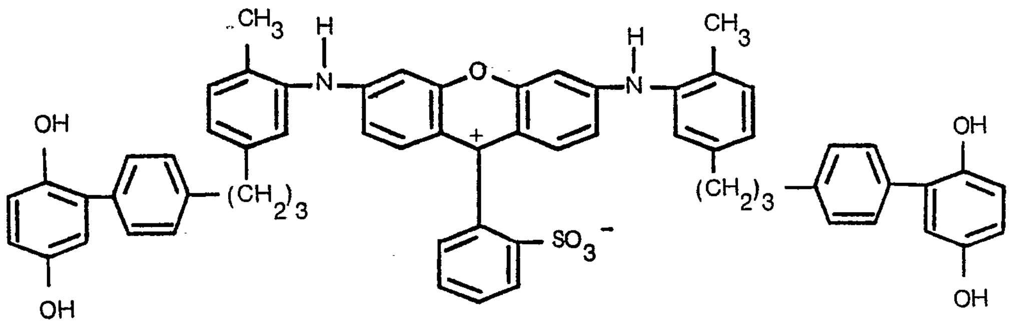

;

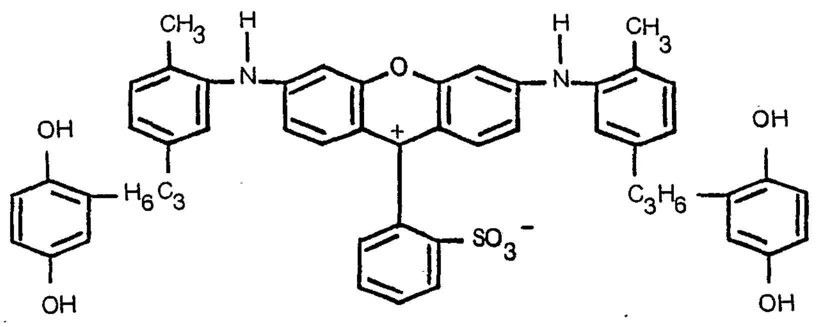

;

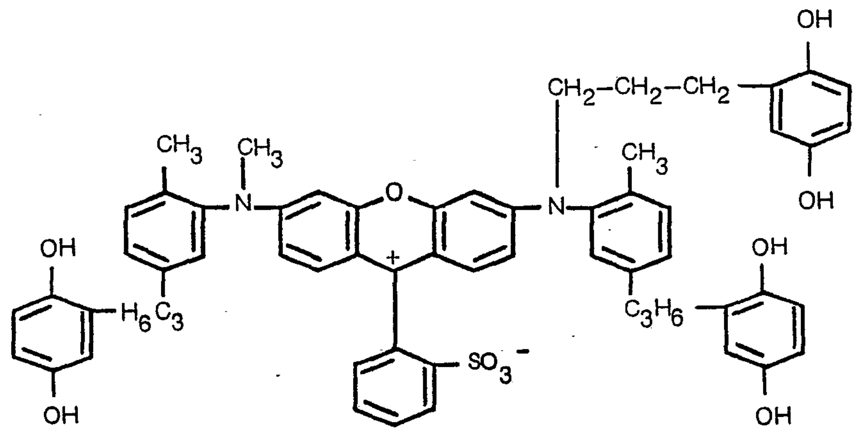

;

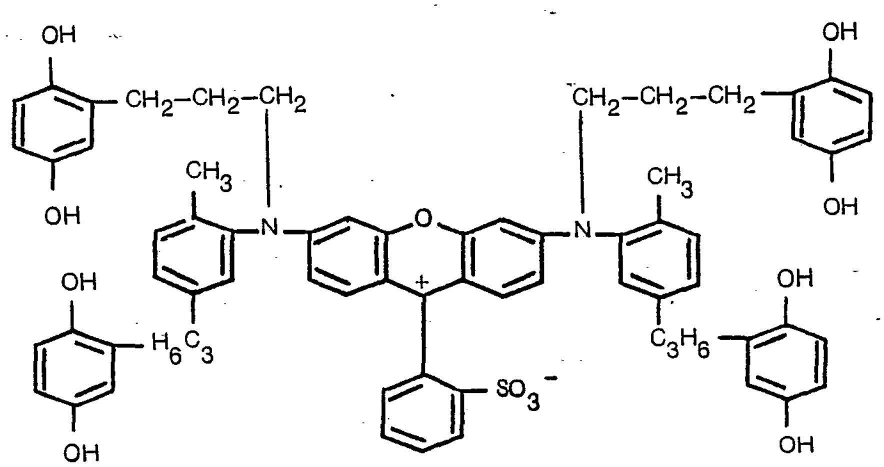

12. Pellicule complète pour former une image en couleurs transférée par diffusion, ladite pellicule complète comprenant, en combinaison, un premier élément semblable à une feuille comprenant un élément photosensible tel que défini dans l'une quelconque des revendications précédentes; un second élément semblable à une feuille adaptée pour être superposée sur ledit élément photosensible durant ou après l'exposition à la lumière; une couche réceptrice de l'image placée dans l'un desdits éléments; et un récipient frangible contenant de façon libérable une composition alcaline aqueuse de traitement et placé de façon à être apte à distribuer ladite composition de traitement entre des couches prédéterminées desdits éléments.

13. Pellicule complète selon la revendication 12, dans laquelle ledit second élément semblable à une feuille est transparent et est superposé sur ledit premier élément semblable à une feuille avant l'exposition à la lumière de sorte que l'exposition à la lumière dudit élément photosensible est effectué à travers ledit second élément semblable à une feuille.

14. Pellicule complète selon la revendication 13, dans laquelle ledit second élément semblable à

une feuille comprend ladite couche réceptrice de l'image, appliquée sur un support transparent, et ladite composition de traitement comprend un pigment réfléchissant la lumière apte à donner un fond blanc contre lequel une image formée dans ladite couche réceptrice de l'image peut être vue à travers ledit support transparent sans séparer lesdits éléments semblables à une feuille superposés.

15. Pellicule complète selon la revendication 13, dans laquelle le support pour ledit élément photosensible est transparent, ladite couche réceptrice de l'image est placée dans ledit élément photosensible adjacent audit support transparent, et une couche d'un pigment réfléchissant la lumière est placée entre ladite couche réceptrice de l'image et ladite couche d'émulsion d'halogénure d'argent et ladite matière donnant un colorant d'image pour fournir un fond blanc contre lequel une image formée dans ladite couche réceptrice de l'image peut être vue à travers ledit support transparent.

16. Image photographique contenant un colorant d'image magenta, caractérisée par le fait que ledit colorant d'image magenta contient le système chromophore représenté par le formule:

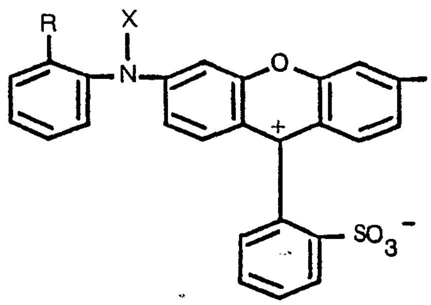

dans laquelle chaque R est identique ou différent et représente un groupe alkyle, et chaque X est identique ou différent et représente de l'hydrogène, un groupe alkyle ou un groupe alkyle substitué.

17. Image photographique selon la revendication 16, dans laquelle chaque R est un groupe alkyle, et chaque X est un groupe alkyle.

18. Procédé en couleurs de diffusion par transfert, dans lequel un élément photosensible contenant une émulsion d'halogénure d'argent et une matière donnant un colorant d'image est exposé et développé avec une composition alkaline aqueuse de traitement, et une distribution selon une image d'un colorant d'image diffusible est formée à partir de ladite matière donnant un colorant d'image en fonction dudit développement, et au moins une partie de ladite distribution selon une image du colorant d'image diffusible est transférée vers une couche réceptrice de l'image placée en superposition avec ladite émulsion d'halogénure d'argent pour donner une image en couleurs transférée par diffusion, caractérisé par le fait que ledit élément photosensible est un élément photosensible selon l'une quelconque des revendications 1 à 11.

19. Procédé en couleurs de diffusion par transfert selon la revendication 18, dans lequel ladite matière donnant un colorant d'image est diffusible dans ladite composition alcaline aqueuse de traitement.

20. Procédé en couleurs de diffusion par transfert selon la revendication 18, dans lequel ladite matière donnant un colorant d'image n'est pas diffusible dans ladite composition alcaline aqueuse de traitement.

21. Procédé en couleurs de diffusion par transfert selon la revendication 20, dans lequel ladite matière donnant un colorant d'image n'est pas diffusible et ledit fragment D de réglage de diffusion est un groupe sulfamidophénol.

22. Composé ayant la formule:

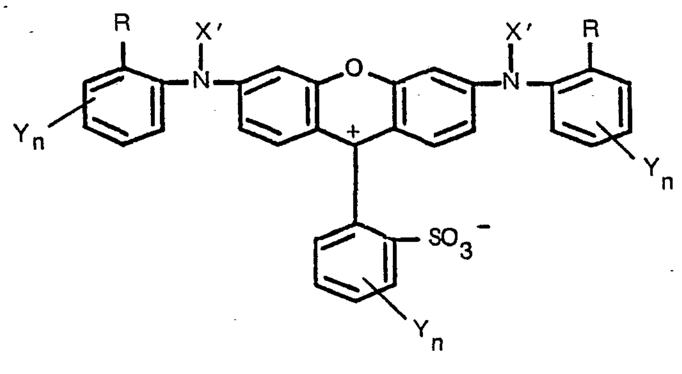

dans laquelle chaque R est identique ou différent et est un groupe alkyle dans lequel chaque Y est un substituant de réglage de diffusion contenant un fragment D de règlage de diffusion donnant, en

fonction du développement de l'halogénure d'argent photosensible exposé, un colorant ou un intermédiaire de colorant, diffusibles ou non diffusibles; X' est de l'hydrogène, un groupe alkyle ou $-(CH_2-X^2-D)_n$ da s lequel $X^2$ est un groupe de liaison divalent et n est 0 ou 1 pourvu qu'au moins un des n soit 1.

23. Composé selon la revendication 22, dans lequel X' n'est pas l'hydrogène.

24. Composé selon la revendication 22, dans lequel ledit composé est un développateur chromogène magenta, ledit fragment D de réglage de diffusion étant un fragment moléculaire développant l'halogénure d'argent.

25. Composé selon la revendication 24, dans lequel ledit substituant Y de réglage de diffusion est le groupe —A—D dans lequel A est une liaison covalente ou un groupe de liaison divalent, et chaque D est un groupe hydroquinonyle.

26. Composé selon la revendication 22, dans lequel ledit fragment D de réglage de diffusion est un fragment de copulation coloré.

27. Composé selon la revendication 22, dans lequel ledit fragment D de réglage de diffusion est un groupe sulfamidophénol.

28. Composé selon la revendication 22, dans lequel ledit groupe de réglage de diffusion est un groupe thiazolidine.

29. Composé selon la revendication 24, ayant la formule choisie parmi le groupe comprenant:

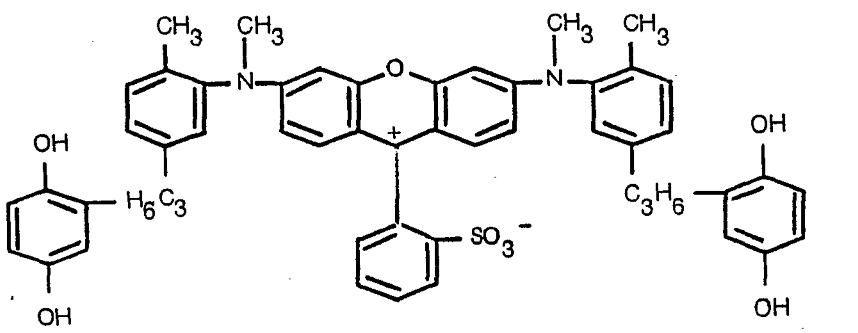

;

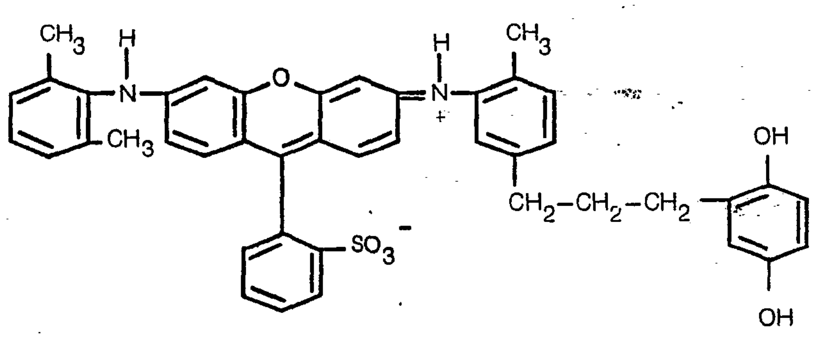

;

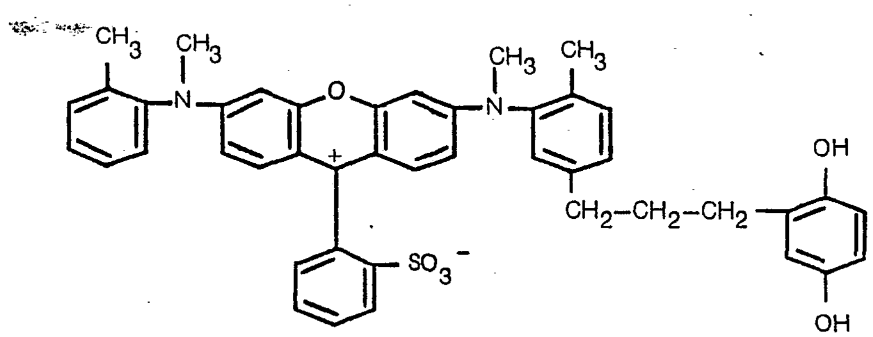

;

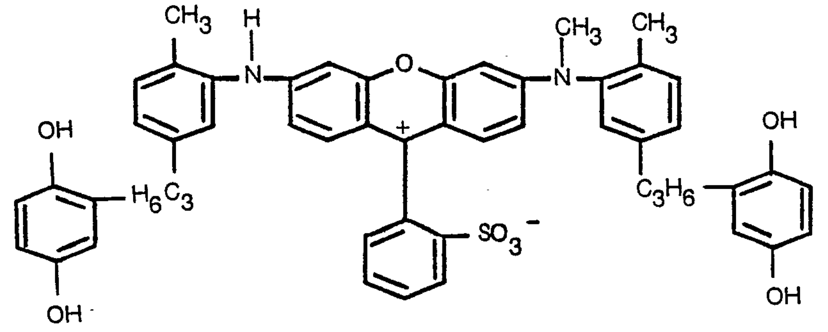
;

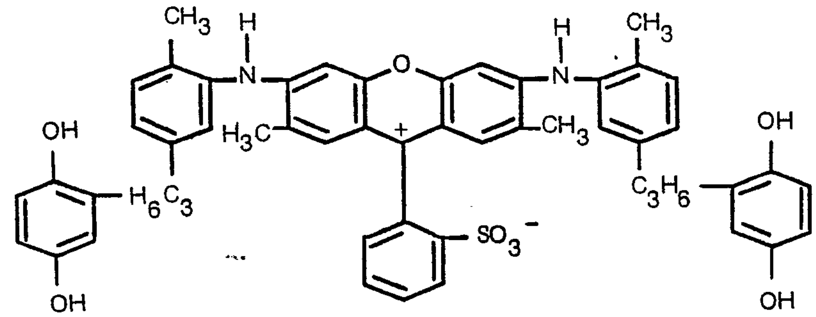
;

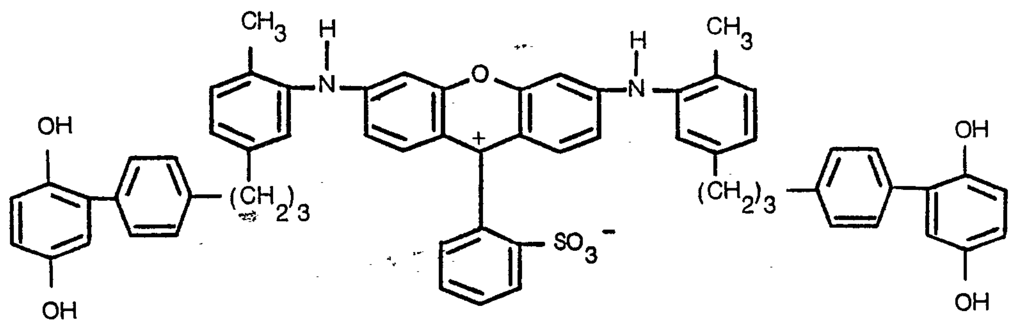
;

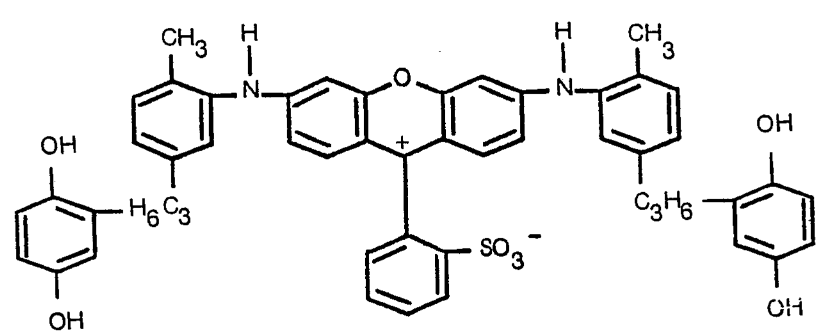
;

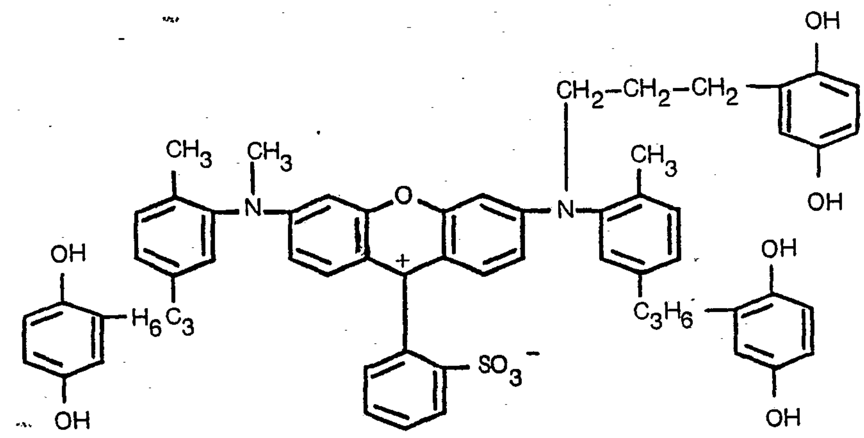

et

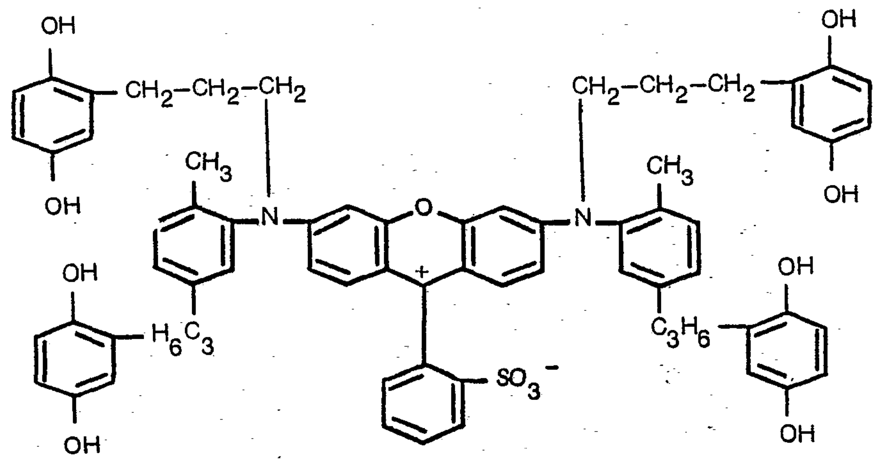

## Patentansprüche

1. Lichtempfindliches Element, enthaltend eine Unterlage, eine Silberhalogenid-Emulsion in einer Schicht, die durch die Unterlage getragen wird, und ein bildfarbstofflieferndes Material in einer durch die Unterlage getragenen Schicht auf derselben Seite wie die Silberhalogenidemulsion, wobei das bildfarbstoff-liefernde Material mindestens eine, die Diffusion steuernde Gruppe enthält und einen purpurnen Bildfarbstoff liefert, dadurch gekennzeichnet, daß das bildfarbstoff-liefernde Material ein chromophores System enthält, das durch die Formel

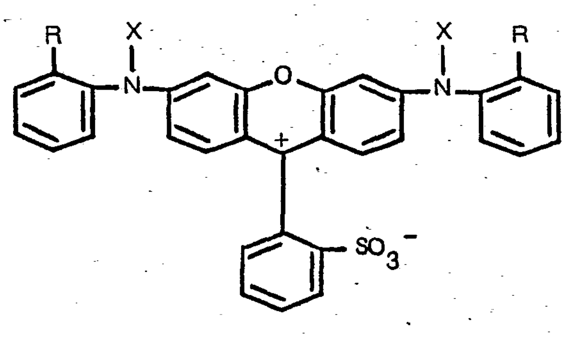

dargestellt wird, worin jedes R gleich oder voneinander verschieden ist und eine Alkylgruppe bedeutet und worin jedes X gleich oder voneinander verschieden ist und Wasserstoff, eine Alkylgruppe oder eine substituierte Alkylgruppe bedeutet.

2. Lichtempfindliches Element nach Anspruch 1, worin jedes R eine Alkylgruppe und jedes X eine Alkylgruppe darstellt.

3. Lichtempfindliches Element Anspruch 1, worin das bildfarbstoff-liefernde Material eine Verbindung der Formel

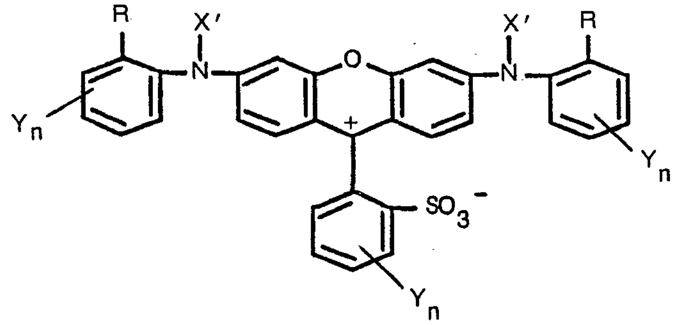

darstellt, worin jedes Y einen Substituenten zur Steuerung der Diffusion darstellt, der eine Gruppe D zur Steuerung der Diffusion enthält, welche als Funktion der Entwicklung des belichteten lichtempfindlichen Silberhalogenids einen diffundierbaren oder nicht-diffundierbaren Farbstoff oder ein Farbstoff-Zwischenprodukt bereitstellt; worin X' Wasserstoff, Alkyl oder $—(CH_2—X^2—D)_n$, worin $X^2$ eine zweiwertige verbindende Gruppe bedeutet; und n 0 oder 1 darstellt, vorausgesetzt, daß mindestens ein n 1 darstellt.

4. Lichtempfindliches Element nach Anspruch 3, worin jedes bildfarbstoff-liefernde Material einen purpurnen Entwicklerfarbstoff darstellt, wobei die Gruppe D zur Steuerung der Diffusion eine Silberhalogenid entwickelnde Gruppe darstellt.

5. Lichtempfindliches Element nach Anspruch 3, worin der Substituent Y zur Steuerung der Diffusion die Gruppe —A—D darstellt, worin A eine kovalente Bindung oder eine zweiwertige verbindende Gruppe und jedes D eine Hydrochinonylgruppe bedeuten.

6. Lichtempfindliches Element nach Anspruch 3, worin die Gruppe D zur Steuerung der Diffusion eine Farbkupplergruppe darstellt.

7. Lichtempfindliches Element nach Anspruch 3, worin jede Gruppe D zur Steuerung der Diffusion ein Sulfonamidophenolgruppe darstellt.

8. Lichtempfindliches Element nach Anspruch 3, worin die Gruppe D zur Steuerung der Diffusion eine Thiazolidingruppe darstellt.

9. Lichtempfindliches Element nach Anspruch 4, worin das lichtempfindliche Element eine rotempfindliche Silberhalogenidemulsion, die einem blaugrünen Entwicklerfarbstoff zugeordnet ist, eine grünempfindliche Silberhalogenidemulsion, die einem purpurnen Entwicklerfarbstoff zugeordnet ist, und eine blauempfindliche Silberhalogenidemulsion, die einem gelben Entwicklerfarbstoff zugeordnet ist, enthält.

10. Lichtempfindliches Element nach Anspruch 2, worin X' eine Aralkylgruppe bedeutet.

11. Lichtempfindliches Element nach Anspruch 3, worin der Entwicklerfarbstoff aus der Gruppe bestehend aus

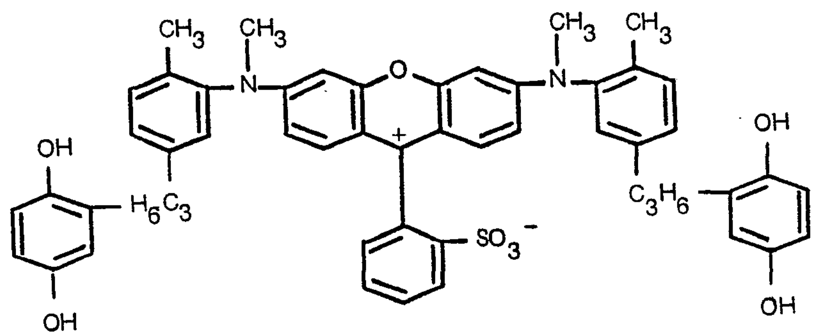

;

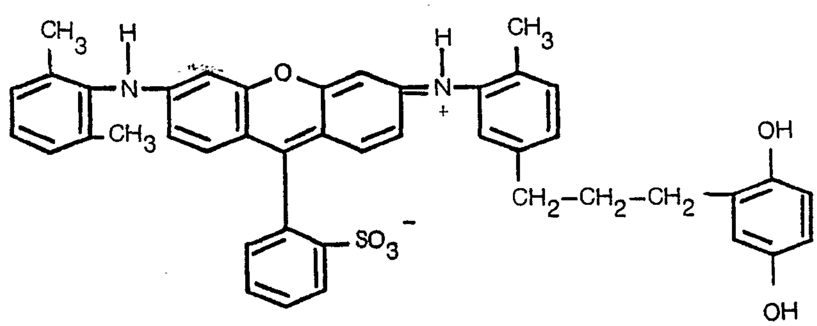

;

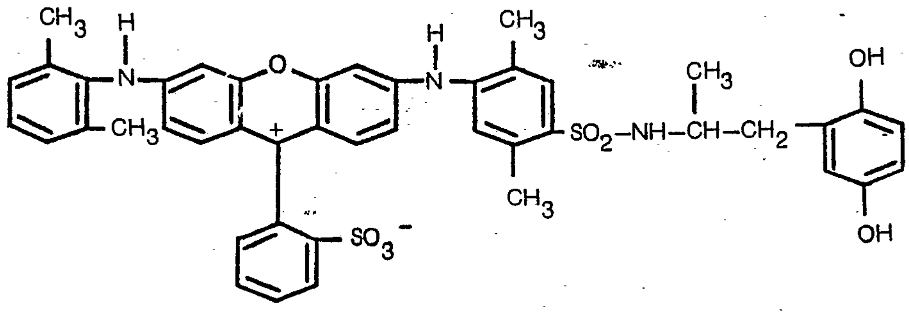

;

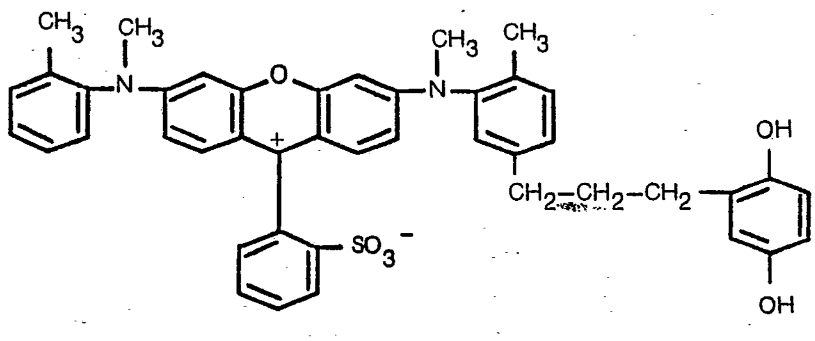

;

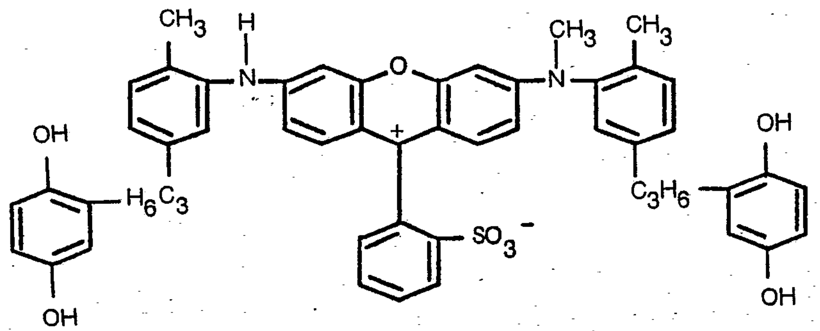

;

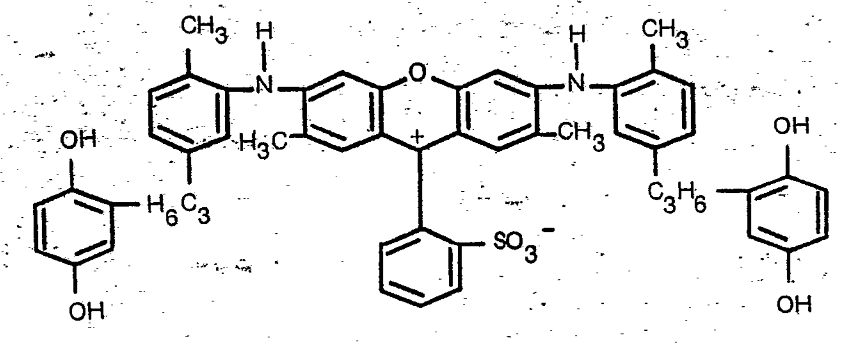

;

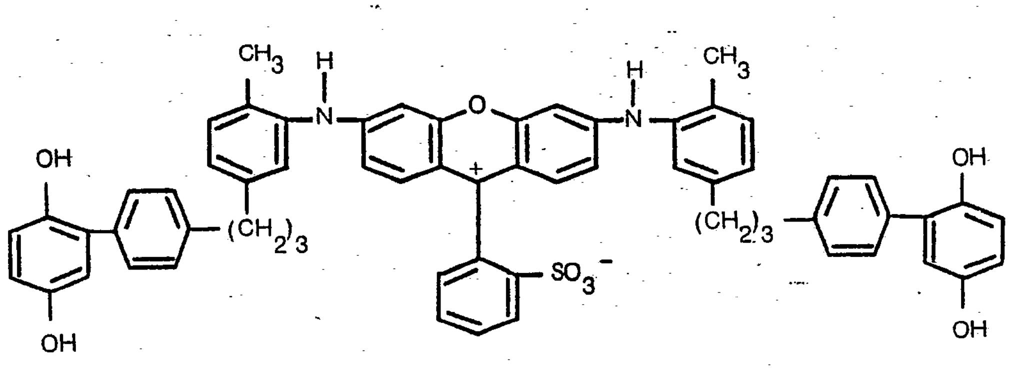

;

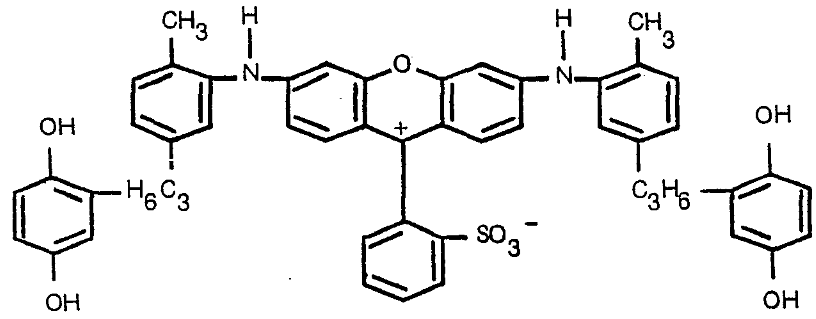

;

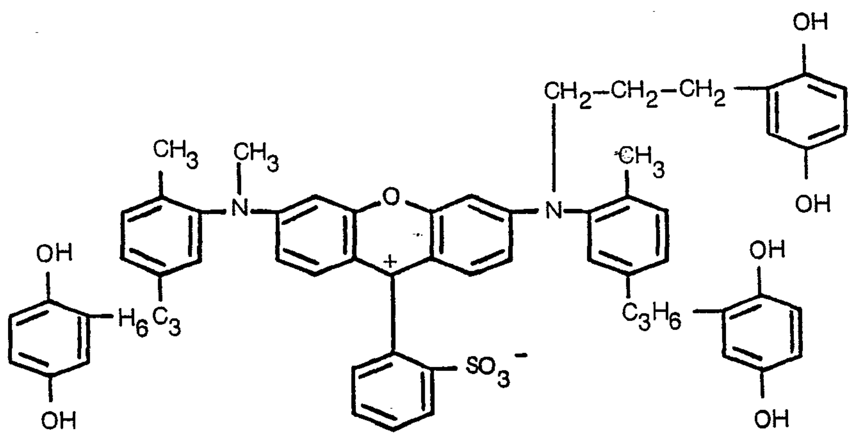

und

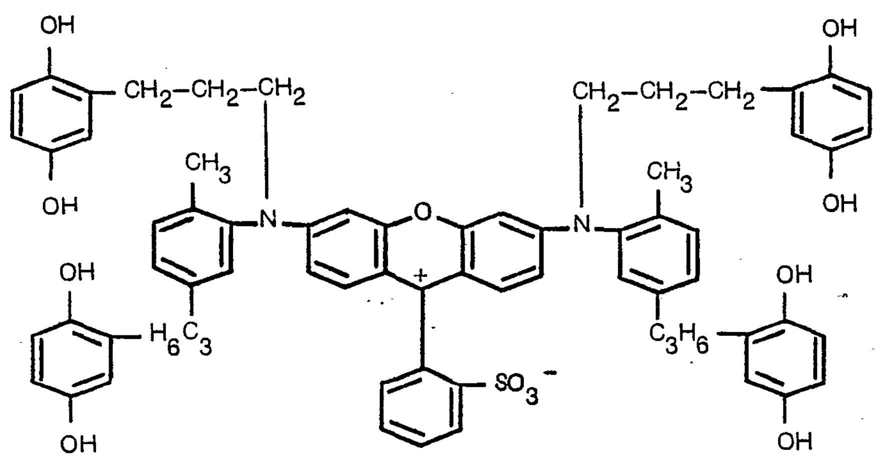

ausgewählt ist.

12. Filmeinheit zur Erzeugung eines farbigen Diffusions-übertragungsbildes, enthaltend, in Kombination, ein erstes, folienartiges Element mit einem lichtempfindlichen Element nach einem der vorhergehenden Ansprüche; ein zweites folienartiges Element, das während oder nach der Belichtung auf das lichtempfindliche Element gelegt werden kann; eine in einem dieser Elemente angeordnete Bildempfangsschicht; und einen aufreißbaren Behälter, der eine wäßrig-alkalische Entwicklermasse freisetzbar enthält und der so angeordnet ist, daß er die Entwicklermasse zwischen vorherbestimmten Schichten der Elemente zu verteilen in der Lage ist.

13. Filmeinheit nach Anspruch 12, worin das zweite folienartige Element durchsichtig ist und vor der Belichtung auf dem ersten folienartigen Element liegt, so daß die Belichtung des Lichtempfindlichen Elements durch das zweite folienartige Element erfolgt.

14. Filmeinheit nach Anspruch 13, worin das zweite folienartige Element die von einer durchsichtigen Unterlage getragene Bildempfangsschicht enthält und worin die Entwicklermasse ein das Licht reflektierendes Pigment enthält, das einen weißen Hintergrund liefert, gegen den ein in der Bildempfangsschicht erzeugtes Bild durch die durchsichtige Unterlage betrachtbar ist, ohne daß die übereinanderliegenden foliernartigen Elemente getrennt werden.

15. Filmeinheit nach Anspruch 13, worin die Unterlage für das lichtempfindliche Element durchsichtig ist, die Bildempfangsschicht im lichtempfindlichen Element angrenzend an die durchsichtige Unterlage angeordnet ist, und eine Schicht eines das Licht reflektierenden Pigments zwischen der Bildempfangsschicht, der Silberhalogenid-Emulsionsschicht und dem farbstoffbild-liefernden Material angeordnet ist, um einen weißen Hintergrund zu liefern, gegen den ein in der Bildempfangsschicht erzeugtes Bild durch die durchsichtige Unterlage betrachtbar ist.

16. Photographisches Bild, enthaltend einen purpurnen Bildfarbstoff, dadurch gekennzeichnet, daß der purpurne Bildfarbstoff das chromophore System enthält, das durch die Formel

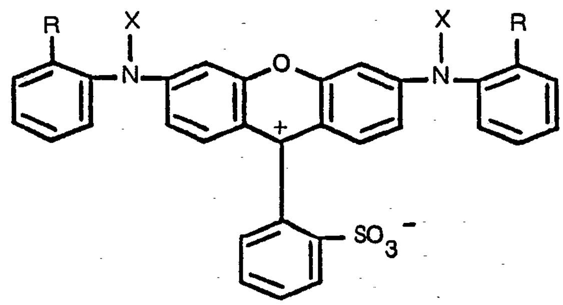

dargestellt ist, worin jedes R gleich oder voneinander verschieden ist und eine Alkylgruppe bedeutet und jedes X gleich oder voneinander verschieden ist und Wasserstoff, eine Alkylgruppe oder ein substituierte Alkylgruppe bedeutet.

17. Photographisches Bild nach Anspruch 16, worin jedes R eine Alkylgruppe und jedes X eine Alkylgruppe darstellt.

18. Farbdiffusionsübertragungsverfahren, worin ein lichtempfindliches Element, das eine Silberhalogenidemulsion und ein bildfarbstoff-lieferndes Material enthält, belichtet und mit einer wäßrigalkalischen Entwicklermasse entwickelt wird und als Funktion der Entwicklung eine bildmäßige Verteilung eines diffundierbaren Bildfarbstoffs aus dem bildfarbstoff-liefernden Material erzeugt wird, und mindestens ein Teil der bildmäßigen Verteilung des diffundierbaren Bildfarbstoffs auf eine Bildempfangsschicht übertragen wird, die über der Silberhalogenidemulsion liegt, um ein Farbstoff-Diffusionsübertragungsbild zu erzeugen, dadurch gekennzeichnet, daß das lichtempfindliche Element ein lichtempfindliches Element nach einem der Ansprüche 1 bis 11 darstellt.

19. Farbdiffusionsübertragungsverfahren nach Anspruch 18, worin das bildfarbstoff-liefernde Material in der wäßrigalkalischen Entwicklermasse diffundierbar ist.

20. Farbdiffusionsübertragungsverfahren nach Anspruch 18, worin das bildfarbstoff-liefernde Material in der wäßrigalkalischen Entwicklermasse nicht diffundierbar ist.

21. Farbdiffusionsübertragungsverfahren nach Anspruch 20, worin das bildfarbstoff-liefernde Material nicht diffundierbar ist und die Gruppe D zur Steuerung der Diffusion eine Sulfonamidophenolgruppe darstellt.

22. Verbindung der Formel

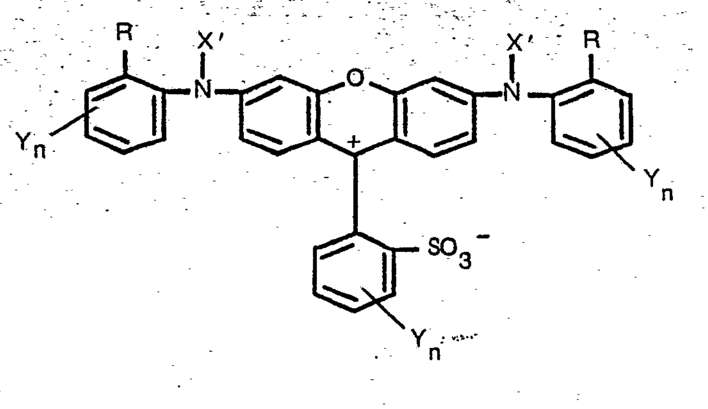

worin jerdes R gleich oder voneinander verschieden ist und eine Alkylgruppe bedeutet, worin jedes Y ein Substituent zur Steuerung der Diffusion ist, der eine Gruppe D zur Steuerung der Diffusion enthält, die als Funktion der Entwicklung des belichteten lichtempfindlichen Silberhalogenids, einen diffundierbaren oder nicht-diffundierbaren Farbstoff oder ein Farbstoff-Zwischenprodukt liefert, X' Wasserstoff, Alkyl oder $—(CH_2—X^2—D)_n$ darstellt, worin $X^2$ eine zweiwertige verbindende Gruppe und n 0 oder 1 ist, vorausgesetzt, daß mindestens ein n 1 ist.

23. Verbindung nach Anspruch 22, worin $X^-$ nicht Wasserstoff ist.

24. Verbindung nach Anspruch 22, worin die Verbindung einen purpurnen Entwicklerfarbstoff

darstellt und die Gruppe D zur Steuerung der Diffusion eine Silberhalogenid entwickelnde Gruppe darstellt.

25. Verbindung nach Anspruch 24, worin der Substituent Y zur Steuerung der Diffusion die Gruppe —A—D bedeutet, worin A eine kovalente Bindung oder eine zweiwertige verbindende Gruppe und jedes D eine Hydrochinonylgruppe darstellt.

26. Verbindung nach Anspruch 22, worin die Gruppe D zur Steuerung der Diffusion eine Farbkupplergruppe darstellt.

27. Verbindung nach Anspruch 22, worin die Gruppe D zur Steuerung der Diffusion eine Sulfonamidophenolgruppe darstellt.

28. Verbindung nach Anspruch 22, worin die Gruppe zur Steuerung der Diffusion eine Thiazolidingruppe darstellt.

29. Verbindung nach Anspruch 24, mit einer Formel aus der Gruppe bestehend aus

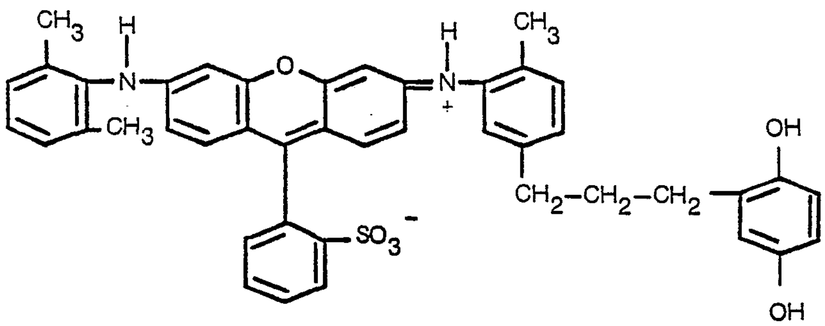

;

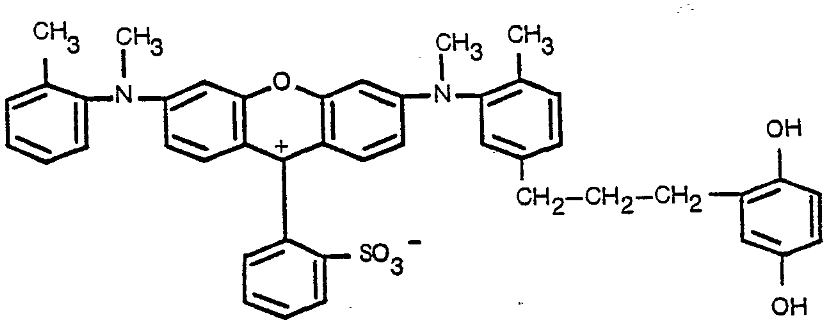

;

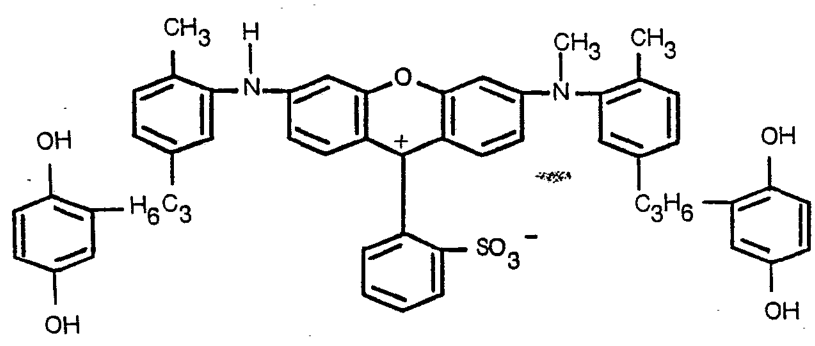

;

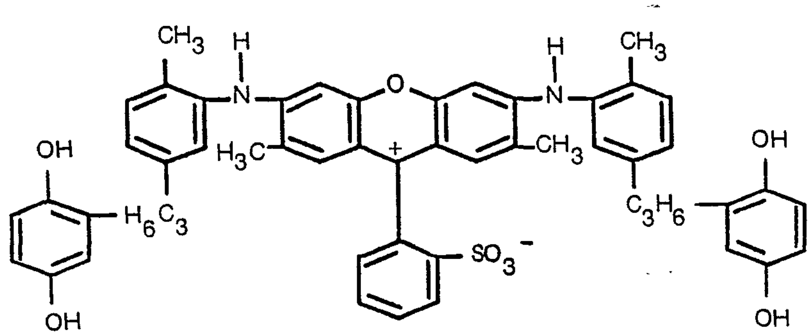

;

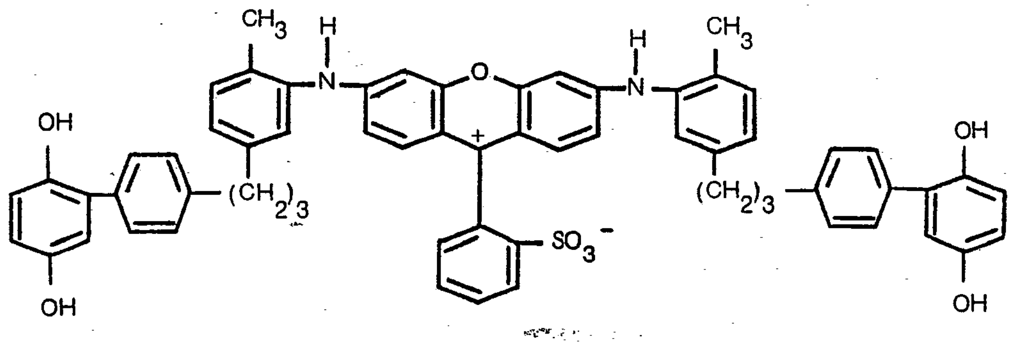

;

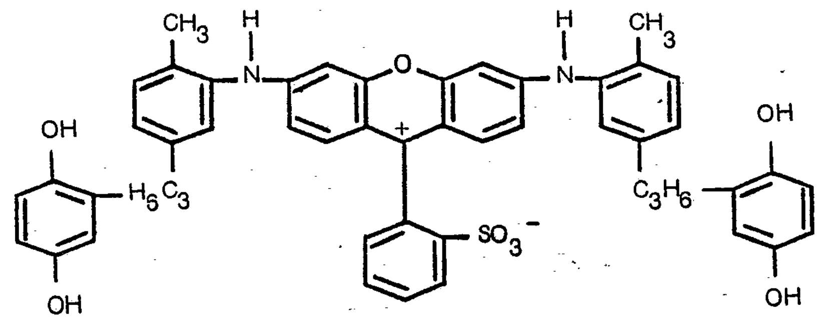

;

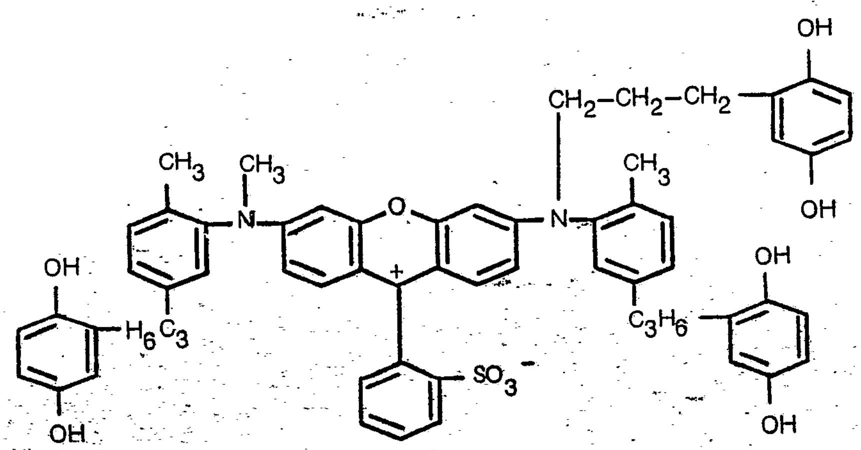

;

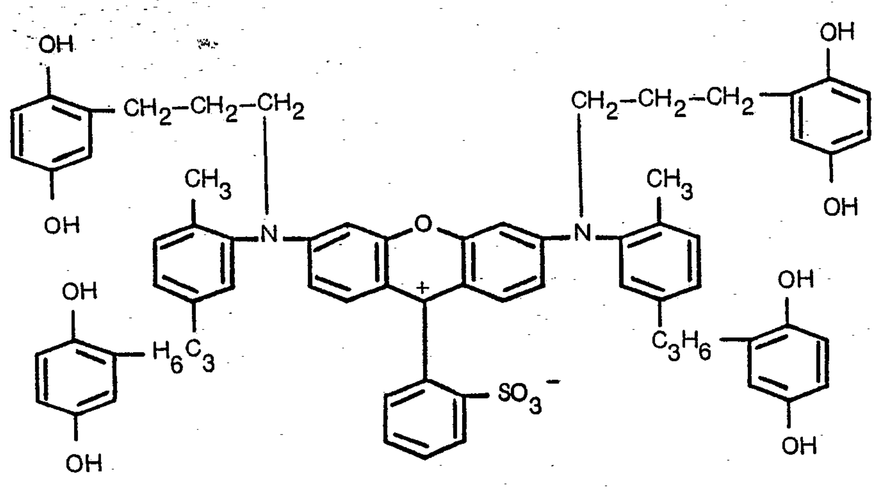

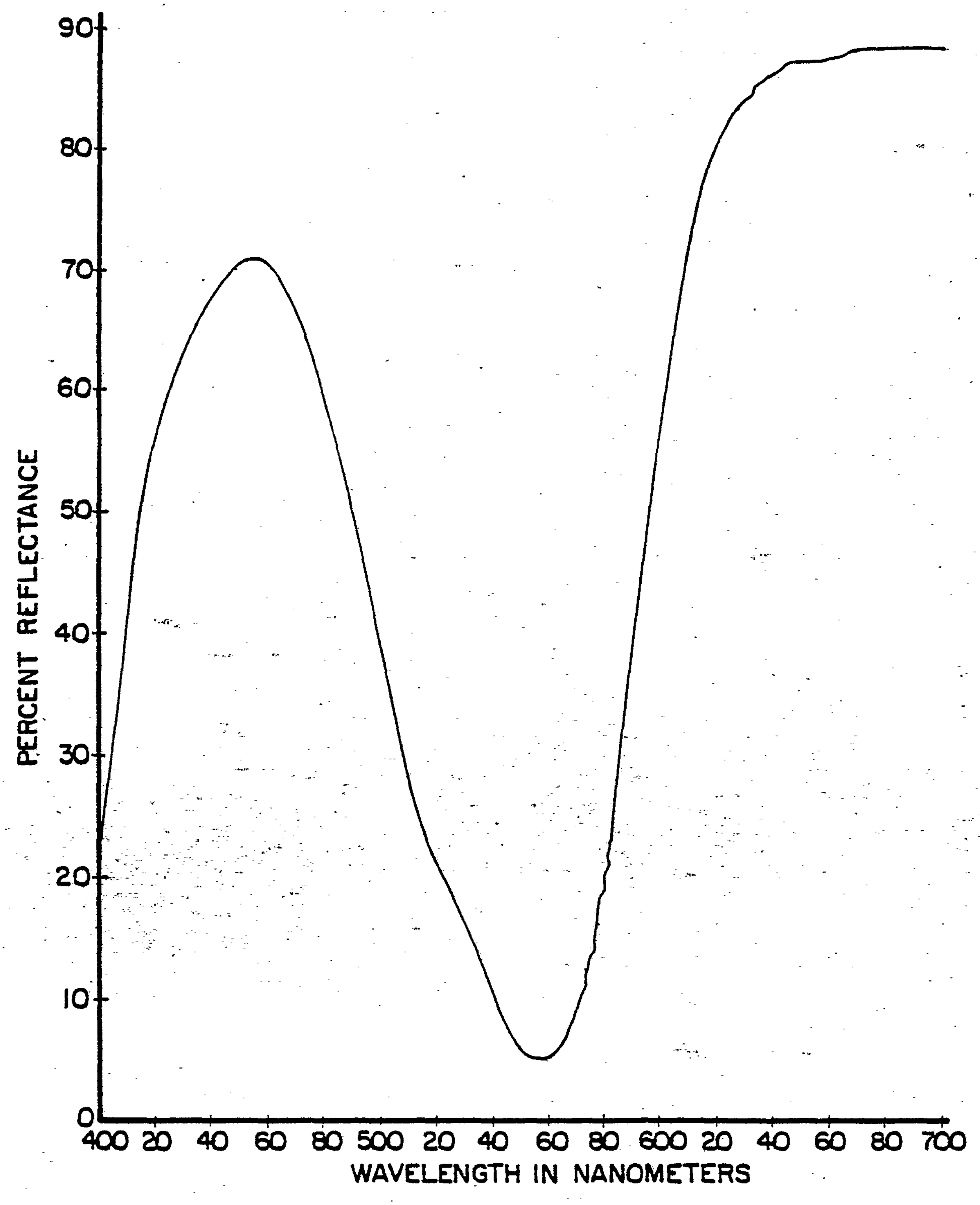
90
80
70
60
50
40
30
20
10
0
PERCENT REFLECTANCE
400 20 40 60 80 500 20 40 60 80 600 20 40 60 80 700
WAVELENGTH IN NANOMETERS